# EUROPÄISCHE PATENTSCHRIFT

(11) **EP 2 916 994 B1**
(45) Veröffentlichungstag und Bekanntmachung des Hinweises auf die Patenterteilung: **26.10.2016**
(21) Anmeldenummer: 13815675.7
(22) Anmeldetag: 07.11.2013
(51) Int. Cl.: B23Q 37/00, B65G 21/06

(54) **FERTIGUNGSANLAGE ZUR HERSTELLUNG EINER BAUGRUPPE AUS MEHREREN BAUTEILEN**
MANUFACTURING PLANT FOR PRODUCING AN ASSEMBLY CONSISTING OF A PLURALITY OF COMPONENTS
INSTALLATION DE PRODUCTION D'UN ENSEMBLE CONSTITUÉ DE PLUSIEURS ÉLÉMENTS

(30) Priorität: 08.11.2012 AT 504982012
(43) Veröffentlichungstag der Anmeldung: 16.09.2015
(73) Patentinhaber: STIWA Holding GmbH, 4800 Attnang-Puchheim (AT)
(72) Erfinder: STICHT, Walter Leopold, A-4800 Attnang-Puchheim (AT); KRITZINGER, Johann, A-4873 Frankenburg am Hausruck (AT); MERSNIK, Christian, A-4800 Attnang-Puchheim (AT); SCHLAGER, Reinhard, A-4892 Fornach (AT)
(74) Vertreter: Burger, Hannes
(86) Internationale Anmeldenummer: PCT/AT2013/050210
(87) Internationale Veröffentlichungsnummer: WO 2014/071431

(56) Entgegenhaltungen:
- WO-A1-2005/095049
- DE-A1-102005 034 079
- DE-A1-102009 003 492

## Beschreibung

Die Erfindung betrifft eine Fertigungsanlage zur Herstellung einer Baugruppe aus mehreren Teilen, wie diese im Oberbegriff des Anspruches 1 beschrieben ist.

Die WO 2006/069410 A2 offenbart eine Fertigungsanlage zur Herstellung einer lasergeschweißten Baugruppe aus mehreren Teilen, umfassend eine Transportanlage zur Beförderung der Teile mittels Teileträgern, mehrere Schweißstationen, welche in Transportrichtung entlang von unabhängig voneinander arbeitenden Transportabschnitten in einem Rasterabstand hintereinander angeordnet sind. Die Schweißstationen weisen ein Lagerrahmenmodul sowie eine am Lagerrahmenmodul gelagerte Handhabungsvorrichtung für einen Schweißkopf auf, wobei der Schweißkopf über eine Linearführungseinheit sowie eine Schwenkachseneinheit relativ bezüglich der Schweißstation verstellbar ist. Die Linearführungseinheit umfasst mehrere eigene Linearführungen mit elektronisch geregelten Antrieben zur jeweiligen Verstellung des Schweißkopfes in eine der drei unterschiedlichen Hauptachsenrichtungen. Die Schwenkachseneinheit umfasst mehrere eigene Schwenkantriebe mit Schwenkachsen zur jeweiligen Verstellung des Schweißkopfes um eine der drei unterschiedlichen Hauptachsenrichtungen. Die Linearführungen der Linearführungseinheit sind distanziert von den Schwenkachsen der Schwenkachseneinheit angeordnet. Der Rasterabstand zwischen den Schweißstationen ist derart groß, dass während der Arbeitsprozesse eine gegenseitige Behinderung der Stellbewegungen für die Schweißköpfe erst überhaupt nicht eintreten kann. Noch dazu ist eine solche Betriebsweise vorgesehen, dass in einem ersten Transportabschnitt, welchem die erste Schweißstation zugeordnet ist, geschweißt wird, während in einem zweiten Transportabschnitt, welchem die zweite Schweißstation zugeordnet ist, Teile transportiert werden. Ein gleichzeitiges Schweißen an beiden Schweißstationen ist nicht vorgesehen.

Die WO 2005/095049 A1 offenbart eine Fertigungsanlage mit einem modularen Transfersystem für Werkstücke. Die Werkstücke sind auf Werkstückträgern aufgespannt, welche Werkstückträger von einem CNC-Achsensystem in x- und in y-Richtung positioniert werden, um die Werkstücke einer Bearbeitung durch Werkzeuge von aufeinanderfolgenden Fertigungsmodulen zuzuführen. Das Werkzeug eines Fertigungsmodules ist ausschließlich in z-Hauptachsrichtung bewegbar und nimmt einen Bearbeitungsvorgang, wie etwa Pressen, Stan zen oder Biegen am positionierten Werkstück vor. Je Fertigungsmodul ist ein CNC-Achsensystem vorgesehen, wobei die einzelnen CNC-Achsensysteme zur Positionierung der Werkstückträger derart ausgebildet sind, dass die Werkstückträger von einem Fertigungsmodul zu einem benachbarten Fertigungsmodul übergeben werden können. Weiters kann vorgesehen sein, dass an den Fertigungsmodulen Umsetzer oder andere Zusatzelemente verbaut sind.

Der vorliegenden Erfindung liegt die Aufgabe zugrunde, eine Fertigungsanlage zu schaffen, welche auch bei Anordnung vielzähliger Arbeitsstationen in Transportrichtung eines Transportabschnitts ein gleichzeitiges, ungehindertes Arbeiten ermöglicht.

Diese Aufgabe der Erfindung wird durch die Merkmale des Anspruches 1 gelöst.

Der sich durch die Merkmale des Anspruches 1 ergebende Vorteil liegt darin, dass durch die Begrenzung des maximalen Arbeitsbereiches der Handhabungsvorrichtung auf die Breite des jeweiligen Lagerrahmenmoduls jede der unmittelbar benachbart angeordneten Handhabungsvorrichtungen gleichzeitig und voneinander unabhängig die in der jeweiligen Arbeitsstation durchzuführenden Bewegungsabläufe bzw. Arbeitsprozesse durchführen kann. Es können auf geringstem Raum die einzelnen Arbeitsstationen nebeneinander angeordnet werden und auch bei unmittelbar benachbarten Arbeitsstationen ohne Rücksicht auf die jeweils benachbarte Arbeitsstation die Verstellvorgänge für die Bewegung der Arbeitseinheiten durchgeführt werden. So kann weiters auf einen softwareunterstützten Kollisionsschutz bei der Steuerung der einzelnen Bewegungsabläufe verzichtet werden. Dadurch können die einzelnen Bewegungsabläufe auch rascher durchgeführt werden, da für den geplanten Bewegungsablauf keine Sicherheitskontrollberechnung durchgeführt werden muss. Damit kann aber auch Rechnerleistung eingespart bzw. überhaupt mit einer kostengünstigeren Steuerung das Auslangen gefunden werden.

Vorteilhaft ist eine Ausbildung nach Anspruch 2, da nicht jede der Arbeitsstationen mit einem Lagerrahmenmodul besetzt sein muss, wodurch bei einer derartigen Fertigungsanlage Freiräume zwischen den Lagerrahmenmodulen realisiert werden können. Diese Freiräume können dazu genutzt werden, bei einer Verkürzung der Montagezeit, bzw. einer höheren zu produzierenden Stückzahl, zusätzliche Lagerrahmenmodule in die Anlage zu integrieren, ohne dass die Fertigungsanlage demontiert werden muss. Unabhängig davon kann ein solcher Freiraum mit Vorteil aber auch dazu verwendet werden, eine Schweißverbindung, die in einer solchen Arbeitsstation hergestellt wurde durch die zwischen den Arbeitsstationen bestehende Distanz abzukühlen.

Vorteilhaft ist auch eine weitere Ausführungsform nach Anspruch 3, da dadurch eine eindeutige Trennung der linearen sowie der rotatorischen Verstellbewegungen erzielt werden kann. So können die rotatorischen Verstellbewegungen in den Bereich beispielweise von Greiffingern verlegt werden, wodurch nicht nur eine geringere Bauteilmasse sondern auch kleinere Abmessungen im Bereich der Arbeitseinheit bzw. Greifereinheit der Handhabungsvorrichtung erzielbar sind.

Vorteilhaft ist weiters eine Ausbildung nach Anspruch 4, da dadurch für jede der einzelnen Verstellrichtungen sowohl in linearer als auch in rotatorischer Sicht eine eigene Verstellachse zur Verfügung steht, wodurch ein Sechs-Achsen-System geschaffen wird. Dadurch kann eine höhere Verstellmöglichkeit bei geringerem Platzbedarf erzielt werden.

Durch die Ausbildungen nach den Ansprüchen 5 bis 7 wird durch den Tragrahmens eine funktionale Aufteilung in jeweils zusammengehörige Baugruppen, nämlich der Linearführungseinheit und der Schwenkachseneinheit geschaffen. So wird einerseits die eine Baueinheit ausschließlich für die translatorischen Verstellbewegungen und andererseits die andere Baueinheit ausschließlich für die rotatorischen Verstellbewegungen herangezogen. Dadurch können die Linearführungseinheit und der Schwenkachseneinheit sehr kompakt bzw. schlank gebaut werden und erfordern nur einen sehr kleinen Einbauraum am Lagerrahmenmodul und können dennoch alle notwendigen Verstellbewegungen,bevorzugt in sechs Achsen realisiert werden. Dabei ist auch von Vorteil, dass alleinig durch den Tragrahmen die Möglichkeit geschaffen wird, die beiden Tragrahmenelemente gegeneinander zu verschwenken bzw. zu verdrehen. Damit wird auf kleinstem Raum eine weitere Verstellmöglichkeit um eine weitere der Hauptachsen geschaffen.

Bei der Ausgestaltung nach Anspruch 8 ist von Vorteil, dass am weiteren Tragrahmenelement des Tragrahmens eine zusätzliche Verstellmöglichkeit für die Greiffinger in eine der weiteren Hauptachsenrichtungen realisiert wird. So kann eine Greifereinheit geschaffen werden, bei welcher auf engstem Raum rotatorische Verstellmöglichkeiten in alle der drei unterschiedlichen Hauptachsenrichtungen geschaffen werden.

Vorteilhaft ist weiters auch noch eine Ausbildung nach Anspruch 9, da damit für die Greiffinger auf engstem Raum sowohl eine Verschwenkung um die gemeinsame Schwenkachse als auch eine Längsverstellung in Richtung derselben durchgeführt werden kann. Damit wird eine Greiferanordnung geschaffen, bei welcher trotz des geringen Platzangebotes auf engstem Raum eine hohe Bewegungsfreiheit für die duchzuführenden Verstellvorgänge sowie Greifvorgänge geschaffen wird. Damit können nicht nur zusätzliche Bauteile eingespart, sondern auch die bewegten Massen reduziert werden.

Durch die Weiterbildung nach Anspruch 10 wird trotz des Vorsehens von Schwenkmöglichkeiten um die drei Hauptachsenrichtungen eine kompakte Schwenkachseneinheit geschaffen und auch noch eine hohe Flexibilität für die einzelnen Verstellbewegungen beibehalten.

Durch die Ausbildung nach Anspruch 11 kann eine überlagerte Verstellbewegung der Greiffinger erzielt werden, insofern als dass die gemeinsame Z-Achse nicht bloß der rotatorischen Lagerung und Verstellung der Greiffinger dient, sondern auch der geringfügigen Greifbewegung in Axialrichtung. Damit kann mit einem geringen Zusatzaufwand eine sehr kompakte Baueinheit geschaffen werden, bei welcher die Greiffinger nicht nur eine Schwenkbewegung, sondern auch eine Linearbewegung zur Durchführung der Greif- bzw. Freigabebewegung durchführen können. Durch die Umsetzung des Verstellhubes in eine dazu in senkrechter Richtung verlaufende Verstellbewegung der Greiffinger wird so auf engstem Raum ein kompakter Verstellmechanismus geschaffen. Wird das Übertragungselement als hohlzylindrischer Bauteil ausgebildet, kann der Verstellhub der Stellanordnung unabhängig von der Relativlage des unteren Tragrahmenelements erfolgen.

Mittels der Weiterbildung nach Anspruch 12 kann so durch die Anordnung sowie das Zusammenwirken der Eingriffsvorrichtung mit dem Übertragungselement der Stellhub der Stellanordnung auf das Übertragungselement hin übertragen werden. So kann mit dem Stellorgan der Stellanordnung die geradlinig ausgerichtete Verstellbewegung auf das am weiteren Tragrahmenelement gelagerten Übertragungselement weitergeleitet werden.

Bei der Ausgestaltung nach Anspruch 13 ist von Vorteil, dass so eine exakte Fügung des Übertragungselements am weiteren Tragrahmenelement erzielbar ist. Weiters kann dadurch aber auch noch die Führungsstange die Hubbewegung des Übertragungselements mitmachen, wodurch auch so für das Übertragungselement eine sehr exakte Führungsgenauigkeit erzielbar ist.

Von Vorteil ist auch noch eine Ausbildung nach Anspruch 14, da so durch die erfolgte Verstellbewegung der Führungsstange der relative Verstellhub bezüglich des weiteren Tragrahmenelements an die jeweilige am Stellteil ausgebildete bzw. angeordnete Kulissenbahn übertragen wird. Durch die entsprechende Schrägstellung der Kulissenbahnen bezüglich des Verstellhubes kann so die Querbewegung der Greiffinger an der Schwenkachse erreicht werden.

Vorteilhaft ist auch eine Ausbildung nach Anspruch 15, da damit eine sehr schlanke Bauweise der Handhabungsvorrichtung erzielt werden kann. Dadurch können Verstellmöglichkeiten der gesamten Handhabungsvorrichtung in alle der drei Hauptachsenrichtung sowohl in linearer als auch in rotatorischer Sicht geschaffen werden.

Gemäß einer Ausbildung, wie im Anspruch 16 beschrieben wird eine Fertigungsanlage geschaffen, in der auch mehrere Arbeitsstationen bzw. Teilbereitstellungsstationen in einem Lagerrahmenmodul angeordnet sein können wodurch die Komplexität des Systems vermindert werden kann. Dadurch können einerseits die Rüstzeiten vermindert werden und weiters die Anschaffungskosten für eine derartige Fertigungsanlage möglichst gering gehalten werden.

Nach einer vorteilhaften Weiterbildung gemäß Anspruch 17 kann zusätzlich zu einer Arbeitsstation auch eine Teilebereitstellungsstation in einem Lagerrahmenmodul angeordnet sein.

Dabei erweist sich eine Ausgestaltung nach Anspruch 18 vorteilhaft, weil eine stabile Baueinheit geschaffen wird, welche zur Aufnahme der einzelnen Handhabungsvorrichtung dient. Weiters wird damit die Möglichkeit geschaffen, ein Baukastensystem zu bilden, bei dem auf eine Vielzahl von Gleichteilen zurückgegriffen werden kann. Dadurch kann weiters auch noch die Fertigungsanlage rasch auf unterschiedliche Fertigungsvorgänge umgerüstet werden.

Nach einer vorteilhaften Weiterbildung gemäß Anspruch 19 wird für die nach dem Baukastensystem zusammengesetzte Rahmenkonstruktion ein sehr stabiler Grundaufbau erreicht.

Schließlich ist aber auch eine Ausbildung, wie im Anspruch 20 beschrieben, möglich, da dadurch je nach Bedarf, den einzelnen Arbeitsstationen die jeweils dort benötigten Teile zugeführt werden können.

Zum besseren Verständnis der Erfindung wird diese anhand der nachfolgenden Figuren näher erläutert.

Es zeigen jeweils in stark schematisch vereinfachter Darstellung:
- Fig. 1: eine Fertigungsanlage mit einer Transportanlage zur Beförderung von Teilen mittels Teileträgern und in Transportrichtung hintereinander angeordneten Arbeitsstationen und Teilebereitstellungsstationen, schaubildlicher Darstellung;
- Fig. 2: einen Teilabschnitt der Fertigungsanlage nach Fig. 1 in Ansicht, jedoch ohne Teilebereitstellungsstationen und Transportanlage sowie einem stilisierten Grundrahmen;
- Fig. 3: einen Teil einer Arbeitsstation mit deren Lagerrahmenmodul sowie der daran bevorzugt lösbar befestigten Handhabungsvorrichtung, in schaubildlicher Darstellung;
- Fig. 4: einen Teilausschnitt der Handhabungsvorrichtung mit einer Greifereinheit, in schaubildlicher Darstellung;
- Fig. 5: die Greifereinheit und Schwenkachseneinheit für die Handhabungsvorrichtung, in schaubildlicher Darstellung;
- Fig. 6: die Greifereinheit und Schwenkachseneinheit für die Handhabungsvorrichtung, in schaubildlicher Darstellung;
- Fig. 7: ein Detail der Greifereinheit im Bereich der Schwenkachse für die Greiffinger, in Draufsicht geschnitten gemäß den Linien VII-VII in Fig. 6;
- Fig. 8: die Lagerung eines Greiffingers an der Schwenkachse nach den Fig. 6 und 7, in Ansicht gemäß Pfeil VIII in Fig. 7 sowie in vergrößerter Darstellung;
- Fig. 9: ein schematisches Ausführungsbeispiel der möglichen Anordnung von verschiedenen Arbeitsstationen und Lagerrahmenmodulen;
- Fig. 10: eine Draufsicht eines schematischen Ausführungsbeispieles der möglichen Anordnung von verschiedenen Arbeitsstationen und Lagerrahmenmodulen;
- Fig. 11: eine Draufsicht eines schematischen Ausführungsbeispieles der möglichen Anordnung von verschiedenen Arbeitsstationen und Lagerrahmenmodulen mit unterschiedlichen Breiten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

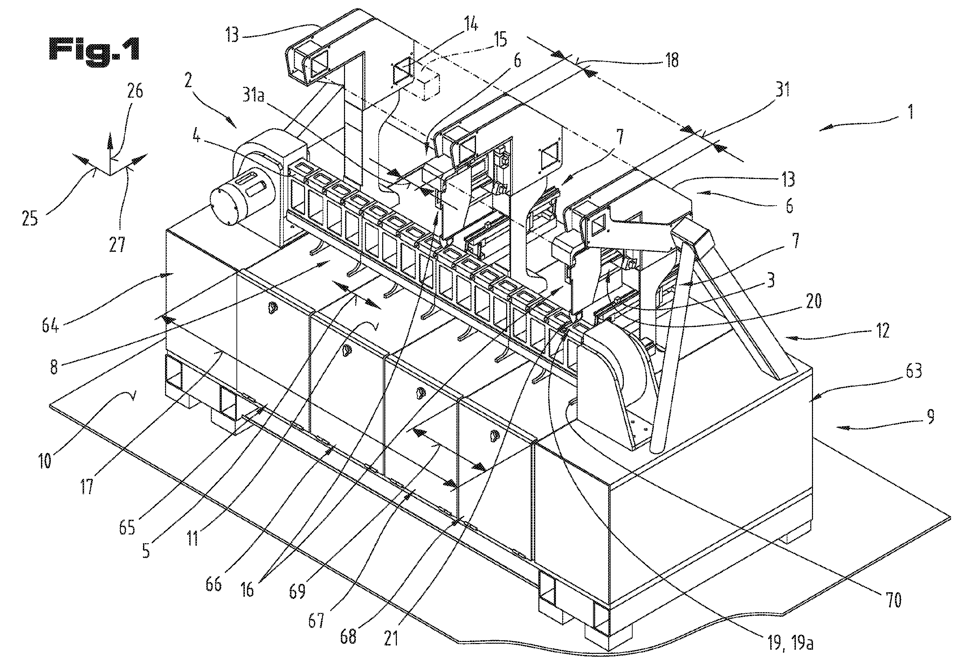

In den Fig. 1 bis 9 ist eine Fertigungsanlage 1 sowie Details derselben gezeigt, welche zumindest eine Transportanlage 2 zur Beförderung von einzelnen oder mehreren gleichen und/oder unterschiedlichen Teilen 3 mittels Teileträgern 4 und entlang eines Transportabschnittes in Transportrichtung 5 hintereinander angeordnete Arbeitsstationen 6 und Teilebereitstellungsstationen 7 umfasst.

Die Transportanlage 2 umfasst einen Grundrahmen 8 und kann über diesen auf einem Traggehäuse 9 aufgebaut werden. Das Traggehäuse 9 bildet hierzu an seiner einem Boden 10 abgewandten Oberseite eine Anschlussebene 11 aus, auf welcher die Transportanlage 2 mit dem Grundrahmen 8 abgestützt und über nicht näher dargestellte Verbindungselemente, beispielweise Schrauben, lösbar am Traggehäuse 9 befestigt werden kann.

Andererseits könnte aber die Transportanlage 2 auch mittels des Grundrahmens 8 direkt am Boden 10 aufgestellt werden.

Die Anzahl der Arbeitsstationen 6 und/oder Teilebereitstellungsstationen 7 kann abhängig von der Komplexität des herzustellenden Produktes variieren. So kann die Fertigungsanlage 1 auch nur eine Arbeitsstation 6 oder eine Arbeitsstation 6 und eine Teilebereitstellungsstation 7 umfassen. Die Arbeitsstationen 6 und/oder die Teilebereitstellungsstationen 7 sind bevorzugt automatisiert betrieben. Zumeist dient eine Teilebereitstellungsstation 7 dazu, einer der Arbeitsstationen 6 die dort benötigten Teile 3 in einer vorbestimmten Lage bzw. Ausrichtung für die Entnahme bereit zu stellen. Im Bereich des Teileträgers 4 erfolgt dann in schrittweiser Reihenfolge entlang der Transportrichtung 5 der Montage- bzw. Fügevorgang der zumeist unterschiedlichen Teile 3 zu einer und/oder mehrerer Teilebaugruppen.

In der Fig. 1 sind aus Gründen der besseren Übersicht bloß zwei Arbeitsstationen 6 und bloß zwei Teilebereitstellungsstationen 7 gezeigt. Üblicherweise umfassen solche Fertigungsanlagen 1 je Transportanlage zwei bis zu zwanzig, zumeist zueinander unterschiedliche Tätigkeiten ausführende Arbeitsstationen 6. Diese sind hier in einem engen Raster, bevorzugt jeweils unmittelbar nebeneinander angeordnet. Diese Anordnung ist durch eine strich-punktierte Linie vereinfacht angedeutet.

Die Arbeitsstationen 6 und Teilebereitstellungsstationen 7 sind an einer speziell gestalteten Rahmenkonstruktion 12 angeordnet, wobei eigene Aufnahmerahmen bzw. Lagerrahmenmodule 13 ebenso auf dem Traggehäuse 9 aufgebaut werden können. Die Lagerrahmenmodule 13 sind auf der Anschlussebene 11 abgestützt und werden über nicht näher dargestellte Verbindungselemente, beispielweise Schrauben, lösbar am Traggehäuse 9 befestigt.

Zusätzlich können die Lagerrahmenmodule 13 über parallel zur Transportrichtung 5 verlaufende und durch Aufnahmeöffnungen 14 hindurchgeführte Längstraversen 15, wie in strich-punktierte Linien angedeutet, miteinander verbunden werden. Die Längstraversen 15 werden in den Aufnahmeöffnungen 14 bevorzugt verdrehgesichert gehalten.

Dadurch können die einzelnen Lagerrahmenmodule 13 zu der selbsttragenden Rahmenkonstruktion 12 miteinander oder untereinander verbunden werden, welche sich durch ihren modularen Aufbau auszeichnet. Jeder Lagerrahmenmodul 13 bildet dabei zumindest eine Aufnahme aus, in welcher zumindest eine Arbeitsstation 6 und/oder zumindest eine Teilebereitstellungsstation 7 aufgenommen werden kann.

Wie in der Fig. 1 eingetragen, sind zwei der drei dargestellten Lagerrahmenmodule 13 jeweils mit einer Arbeitsstation 6 und/oder einer Teilebereitstellungsstation 7 ausgestattet. Das dritte Lagerrahmenmodul 13 ist hingegen aus Gründen der besseren Übersicht nicht mit einer Arbeitsstation 6 und/oder einer Teilebereitstellungsstation 7 bestückt, ist jedoch auch dafür vorgesehen.

Die Arbeitsstationen 6 umfassen nach gezeigter Ausführung eine Handhabungsvorrichtung 16 mit einem Greifer, mit dem ein an der Teilebereitstellungsstation 7 bereitgestellter Teil 3 übernommen und auf den dafür durch die Transportanlage 2 bereitgestellten Teileträger 4 übergeben werden kann.

Die hier dargestellte Transportanlage 2 bildet einen Transportabschnitt 17 aus, welcher sich zwischen zwei nachfolgend im Detail noch näher bezeichneten Umlenkvorrichtungen bei der Transportanlage 2 erstreckt und dessen Länge durch eine Maßkote bezeichnet ist.

Die Arbeitsstationen 6 mit ihren Lagerrahmenmodulen 13 sind somit in Transportrichtung 5 des Transportabschnitts 17 hintereinander in einem Rasterabstand 18 angeordnet. Die Handhabungsvorrichtungen 16 bzw. die Arbeitsstationen 6 sind jeweils an einem der Lagerrahmenmodule 13 gelagert bzw. befestigt.
Der Rasterabstand 18 ist hier in Richtung der Transportrichtung 5 relativ gering gewählt und beträgt in etwa 90 mm. Der Rasterabstand 18 kann aber auch ein Vielfaches dieses zuvor angegebenen Wertes betragen, wobei jedoch bei eher eine geringe Abmessung aufweisenden Teilen 3 der geringere Rasterabstand 18 gewählt wird. Maximal soll der Rasterabstand 18 in etwa 360 mm betragen. Damit wird es möglich, bei geringem Platzbedarf je Arbeitsstation 6 eine kompakt ausgebildete Fertigungsanlage 1 bereit zu stellen. Unter "in etwa" wird auch eine Abweichung von ± 10 % des Rasterabstandes 18 verstanden.

Weiters ist die Handhabungsvorrichtung 16 mit einer Arbeitseinheit 19 ausgestattet, welche Arbeitseinheit 19 über eine Linearführungseinheit 20 sowie eine Schwenkachseneinheit 21 relativ bezüglich der Arbeitsstation 6 bzw. deren Lagerrahmenmodul 13 verstellbar ist. Die Arbeitseinheit 19 ist nach gezeigter Ausführung durch eine vereinfacht dargestellte Greifereinheit 19a gebildet, auf welche im Folgenden Bezug genommen wird. Genauso gut kann die Arbeitseinheit 19 auch ein Schweißkopf, insbesondere Strahlschweißkopf, ein Pressstempel, eine Schraubeinheit, eine Bohreinheit, eine Nietvorrichtung oder dgl. sein.

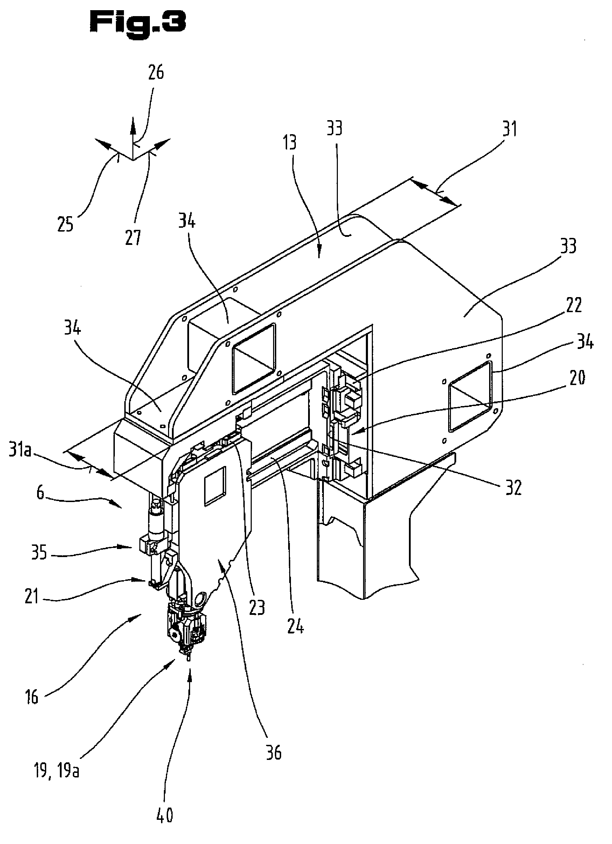

Gemäß der Fig. 3 weist die Linearführungseinheit 20 mehrere eigene Linearführungen 22, 23, 24 mit bevorzugt eigenen, bevorzugt elektronisch geregelten, Antrieben zur jeweiligen Verstellung der Greifereinheit 19a in jeweils eine der drei unterschiedlichen Hauptachsenrichtungen X, Y sowie Z auf, wobei kombinierte Verstellbewegungen auch gleichzeitig erfolgen können. Dabei werden die einzelnen Hauptachsen X, Y sowie Z mit den Bezugszeichen 25, 26 sowie 27 bezeichnet. Die erste Linearführung 22 dient der Verstellung in Richtung der X-Achse 25, die zweite Linearführung 23 dient der Verstellung in Richtung der Y-Achse 26 und schließlich dient die dritte Linearführung 24 zur Verstellung in Richtung der Z-Achse 27.

Allgemein wird hier als X-Achse 25 jene Achsrichtung bezeichnet, welche sich in Transportrichtung 5 und somit entlang des Transportabschnitts 17 erstreckt. Die Y-Achse 26 ist durch die Vertikalrichtung bestimmt bzw. in senkrechter Richtung bezüglich der Anschlussebene 11 ausgerichtet, wobei die Z-Achse 27 sich in Richtung der Tiefe der Fertigungsanlage 1 sowie in paralleler Richtung bezüglich der Anschlussebene 11 erstreckt.

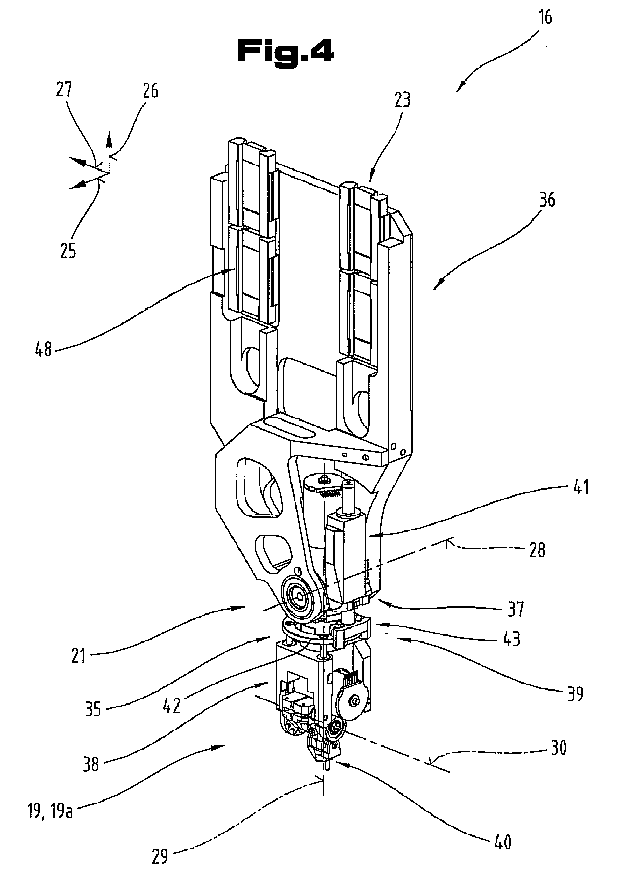

Gemäß der Fig. 4 umfasst die Schwenkachseneinheit 21 ihrerseits eine oder mehrere eigene Schwenkachse(n) 28, 29, 30 mit zum Beispiel je einem eigenen bevorzugt elektronisch geregelten, Schwenkantrieb zur jeweiligen Verstellung der Greifereinheit 19a um zumindest jeweils eine der drei unterschiedlichen Hauptachsenrichtungen X, Y sowie Z mit den Bezugszeichen 25, 26 und 27. Damit kann die Handhabungsvorrichtung 16 z.B. bis zu jeweils drei Linearachsen mit als Linearantrieb ausgebildeten Linearführungen 22 bis 24 sowie z.B. bis zu jeweils drei eigene Schwenkachsen 28 bis 30 umfassen, wodurch eine 6-achsige Verstellmöglichkeit für die Greifereinheit 19a ausgebildet werden kann.

Die oben beschriebenen Linearantriebe 22 bis 24 sind beispielweise elektrische Asynchron- und Synchron-Linearmotoren. Solche Linearmotoren erlauben die direkte Erzeugung linearer Bewegung ohne Getriebe. Sie umfassen einen stromdurchflossenen Primärteil, auch Spulenanordnung bezeichnet und einen Sekundärteil, auch Permanentmagnetanordnung bezeichnet. Des Weiteren sind die Linearführungen 22, 23, 24 der Linearführungseinheit 20 distanziert von den Schwenkachsen 28, 29, 30 der Schwenkachseneinheit 21 angeordnet. So ist die Schwenkachseneinheit 21 in diesem Ausführungsbeispiel im Bereich der Greifereinheit 19a angeordnet und bildet so die Arbeitseinheit 19 aus. Die Linearführungseinheit 20 ist in Vertikalrichtung gesehen oberhalb der Greifereinheit 19a angeordnet und bildet eine zusammengehörige Baueinheit, welche am Lagerrahmenmodul 13 befestigt ist.

Die Lagerrahmenmodule 13 weisen jeweils eine Breite 31 in Transportrichtung 5 des Transportabschnitts 17 auf. Diese Breite 31 ist jene Breite des Lagerrahmenmodules 13, welche die maximale Ausdehnung des Lagerrahmenmodules 13 in Transportrichtung 5 angibt. Vorzugsweise ist diese Breite 31 durch den Außenabstand der Seitenwände 33 vorgegeben. Außerdem weisen die Arbeitsstationen 6 eine Breite 31a in Transportrichtung 5 des Transportabschnitts 17 auf.

Mit Breite 31a einer Arbeitsstation wird jener Bereich der Ausdehnung einer Arbeitsstation 6 bezeichnet, welcher die maximale Ausdehnung der Arbeitsstation 6 in Transportrichtung 5 definiert. Die Breite 31a stellt also die Außengrenze einer Arbeitsstation 6 dar. Es kann durchaus vorgesehen sein, dass eine Arbeitsstation 6 besonders im Verbindungsbereich zu einem Lagerrahmenmodul 13 einen schmäleren Bereich aufweisen, um im Lagerrahmenmodul 13 aufgenommen werden zu können. Weiters kann vorgesehen sein, dass die Breite 31a gleichzeitig den maximalen Arbeitsbereich 32 der Arbeitsstation 6 darstellt.

Bei Ausführung eines Lagerrahmenmodules 13, in welchem nur eine Arbeitsstation 6 aufgenommen werden kann ist die Breite 31a der Arbeitsstation 6 vorzugsweise gleich groß wie die Breite 31 eines Lagerrahmenmodules 13. So kann erreicht werden, dass der Arbeitsbereich 32 einer Arbeitsstation 6 an den Arbeitsbereich 32 einer benachbarten Arbeitsstation 6 anschließen kann, sich die Arbeitsbereiche 32 jedoch nicht überlappen.

Die Breite 31 a ist hier in Richtung der Transportrichtung 5 relativ gering gewählt und beträgt in etwa 90 mm. Der Rasterabstand 18 ist an die Breite 31a der Arbeitsstationen 6 angepasst und ist zumindest gleich groß gewählt, wie die Breite 31a einer Arbeitsstation 6. Der Rasterabstand 18 kann aber auch ein Vielfaches der Breite 31a einer Arbeitsstation 6 betragen, wobei jedoch bei eher eine geringe Abmessung aufweisenden Teilen 3 der geringere Rasterabstand 18 gewählt wird. Maximal soll der Rasterabstand 18 in etwa 360 mm betragen, was einem vierfachen der Breite 31a einer Arbeitsstation 6 entspricht. Bei einer derartigen Konfiguration wäre eine der Möglichkeiten, dass in Richtung der Transportrichtung 5 eine Arbeitsstationen 6 an einer beliebigen Position innerhalb des Rasterabstandes 18 von 360mm angeordnet ist, und anschließend könnten drei Arbeitsstationen 6 bis zur nächsten Arbeitsstation 6 ausgespart sein. Es ist aber auch möglich, in einem weiteren, anschließenden Rasterabstand 18, die Arbeitsstationen 6 in einem unterschiedlichen, mehrfachen der Breite 31a anzuordnen.

Die Handhabungsvorrichtung 16 mit deren die Arbeitseinheit 19 bildenden Greifereinheit 19a weist in Transportrichtung 5 des Transportabschnitts 17 einen Arbeitsbereich 32 auf, welcher maximal der Breite 31a der Arbeitsstation 6 entspricht. Damit werden innerhalb dieses engen Arbeitsbereiches 32 die je Arbeitsstation 6 von der Handhabungsvorrichtung 16 durchzuführenden Bewegungsabläufe abgewickelt, ohne dass eine gegenseitige Behinderung von unmittelbar nebeneinander angeordneten Handhabungsvorrichtungen 16 auftritt. Dies insbesondere auch dann, wenn zeitgleich von unmittelbar nebeneinander angeordneten Handhabungsvorrichtungen 16 Verstellvorgänge mittels der Linearführungseinheit 20 und/oder Schwenkachseneinheit 21 durchgeführt werden, um die Greifereinheiten 19a zu bewegen. Diese Beschränkung des Arbeitsbereiches 32 kann etwa durch mechanische Endanschläge in den Aktoren, insbesondere die Schwenkanordnungen 39, die Stellanordnung 41, die Stellteile 52, 52 sowie die Antriebsanordnung 54 und der Antriebsmotor 55 sowie bevorzugt auch im Zugmitteltrieb 56, der Arbeitsstation 6 bzw. der Handhabungsvorrichtung 16 vorgesehen werden. In einer Weiterbildung kann vorgesehen sein, dass nicht nur die Bestandteile der Arbeitsstation 6 in der mechanischen Beschränkung des Arbeitsbereiches berücksichtigt werden, sondern dass auch von der Greifereinheit 19a aufgenommene und manipulierte Teile in der Einstellung von mechanischen Begrenzungen berücksichtigt werden. Die mechanischen Begrenzungen können einerseits durch die Baugröße der Aktoren realisiert werden, andererseits sind auch Endanschläge mit Endanschlagschaltern möglich.

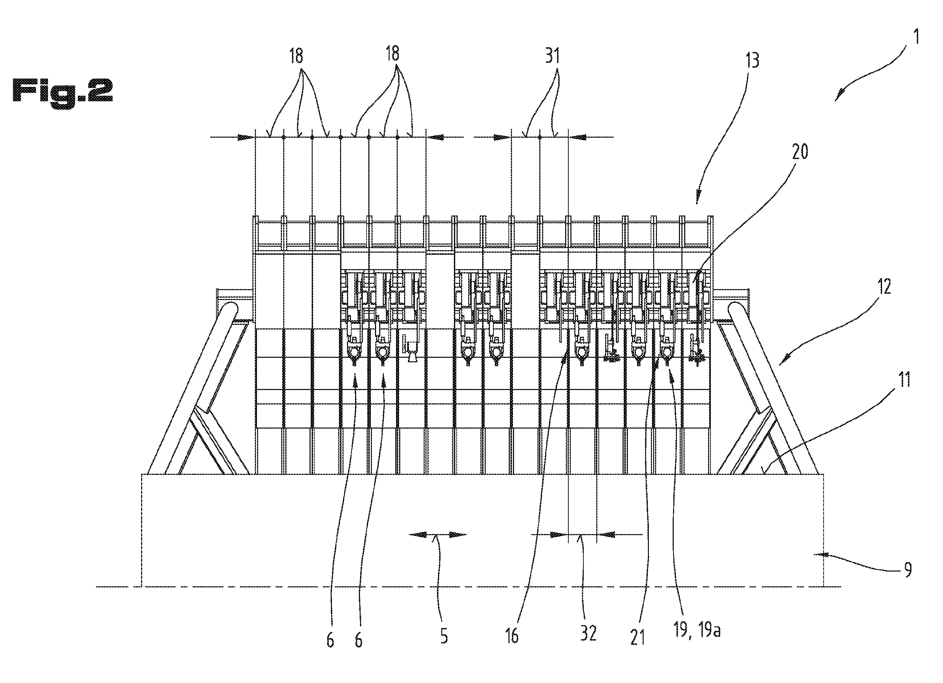

Die Lagerrahmenmodule 13 können in Transportrichtung 5 des Transportabschnitts 17 benachbart, vorzugsweise unmittelbar benachbart oder mit ihren Seitenwänden 33 unmittelbar aneinander liegend zueinander angeordnet sein und eine Längsreihe ausbilden. Weiters umfasst das Lagerrahmenmodul 13 in Transportrichtung 5 des Transportabschnitts 17 voneinander distanziert angeordnete Seitenwände 33 sowie die Seitenwände 33 miteinander verbindende Verbindungsbauteile 34. Wie aus einer Zusammenschau der Fig. 2 und 3 zu ersehen ist, können sich die Lagerrahmenmodule 13 an den jeweils einander zugewendeten Seitenwänden 33 aneinander abstützen. Es wäre aber auch noch möglich, dass Stirnflächen von einzelnen der Verbindungsbauteile 34 seitlich über die Seitenwände geringfügig vorragen, wobei dann diese Stirnflächen zur gegenseitigen Anlage bzw. Abstützung exakt bearbeitet werden können. Damit kann der Bearbeitungsaufwand reduziert werden und möglicher Schweißverzug oder Unebenheiten der Seitenwände 33 besser ausgeglichen werden.

Es wäre aber noch möglich, dass eine Arbeitsstationen 6 ein Prozessmodul, wie beispielweise eine Pressvorrichtung, eine Schweiß-, Bohr-, Schraub-, Stanz- oder Nietvorrichtung, eine Verbindungsstation oder dergleichen, umfassen kann. In diesem Fall kann ein Teil 3 bereits an einer in Transportrichtung 5 vorangegangenen Arbeitsstationen 6 auf den Teileträger 4 übergeben und zu der in Transportrichtung 5 nachfolgenden Arbeitsstationen 6 transportiert worden sein, wo die Teile 3 miteinander gefügt werden. Eine gesonderte Teilebereitstellungsstation 7 kann dann an dieser als Prozessmodul ausgebildeten Arbeitsstation 6 entfallen.

Die Teilebereitstellungsstation 7 umfasst eine Beschickungsvorrichtung zum Fördern und/oder Vereinzeln, mit welcher die Teile 3 aus einem nicht dargestellten Schüttgutbehälter bzw. Teilespeicher entnommen, vereinzelt und/oder ausgerichtet und in einen Bereitstellungsbereich gefördert werden, von wo die Teile 3 beispielweise mittels der Handhabungsvorrichtung 16 entnommen werden. Die Teile 3 werden beispielsweise durch Pfropfen, Scheiben, Stifte, Kontakte etc. gebildet. Solche Teilebereitstellungsstationen 7 sind beispielweise aus der EP 0 637 559 A1, EP 1 460 006 A1 oder der DE 44 34 146 A1 bekannt geworden, deren Inhalt als Offenbarung in diese Anmeldung mitübernommen wird.

Wie nun besser aus einer Zusammenschau der Fig. 4 bis 6 zu ersehen ist, ist hier die Schwenkachseneinheit 21 der die Arbeitseinheit 19 bildenden Greifereinheit 19a ohne zusätzliche Bauteile in verschiedenen schaubildlichen Darstellungen gezeigt, um deren Wirkungsweise besser erläutern zu können. Des Weiteren kann diese Ausbildung der Greifereinheit 19a, insbesondere jene der Schwenkachseneinheit 21, gegebenenfalls eine für sich eigenständige Ausbildung und Erfindung darstellen.

So umfasst die Greifereinheit 19a hier einen eigenen Tragrahmen 35, welcher unter Zwischenschaltung einer zusätzlichen Traganordnung 36 mit der hier nicht näher dargestellten Linearführungseinheit 20 bewegungsverbunden ist. Die Greifereinheit 19a ist an der Traganordnung 36 gelagert bzw. gehalten. Dies erfolgt durch eine Schwenklagerung um bzw. durch die Schwenkachse 28. So kann die Schwenkachseneinheit 21 mitsamt deren Bauteilen mittels der Linearführungen 22 bis 24 in den zuvor beschriebenen Hauptachsenrichtungen 25 bis 27 zusätzlich verstellt werden.

Es wäre aber auch noch möglich, die Traganordnung 36 mit einer zusätzlichen Linearführung 48 zu versehen, welche eine vierte Linearführung der Linearführungseinheit 20 bildet, um so eine weitere vertikale Verstellmöglichkeit in Richtung der Y-Achse 26 zu schaffen, wie dies in der Fig. 4 eingetragen ist. Die Linearführung 48 ist wiederum mit einem, bevorzugt elektronisch geregelten, Antrieb versehen, welcher aber nicht dargestellt ist. Andererseits kann diese Linearführung 48 auch nur alternativ zur zuvor beschriebenen zweiten Linearführung 23 vorgesehen werden. Die zweite Linearführung 23 würde in diesem Fall dann nicht unbedingt notwendig sein. Werden jedoch die zweite Linearführung 23 und vierte Linearführung 48 verwendet, die unabhängig voneinander über die Antriebe ansteuerbar sind, kann eine gleichzeitige bzw. überlagerte Verstellung in Richtung der Y-Achse 26 vorgenommen werden. Andererseits kann bei einem Umrüstvorgang zwischen unterschiedlichen, herzustellenden Baugruppen über die zweite Linearführung 23 eine Referenzposition in Richtung der Y-Achse 26 eingestellt werden, während die Verstellbewegung der Greifereinheit 19a in Richtung der Y-Achse 26 für den Arbeitsprozess ausschließlich von der vierten Linearführung 48 erfolgt.

Weiters sind am Tragrahmen 35 die zuvor bereits beschriebenen Schwenkachsen 28, 29, 30 angeordnet bzw. dort auch physisch durch entsprechende Bauteile ausgebildet. Der Tragrahmen 35 umfasst seinerseits mehrere Tragrahmenelemente 37, 38. Unter Tragrahmenelemente 37, 38 werden hier aber auch mehrere Einzelteile, welche zu einer Baugruppe zusammengesetzt sein können, verstanden. Bei diesem hier gezeigten Ausführungsbeispiel ist das erste Tragrahmenelement 37 relativ bezüglich der Traganordnung 36 um die Schwenkachse 28 zur Verschwenkung um die X-Achse 25 daran gelagert. Bevorzugt verläuft die Schwenkachse 28 in Richtung der Y-Achse 26 gesehen, in etwa mittig bezüglich der gesamten Greifereinheit 19a.

Das erste der Tragrahmenelemente 37 ist hier in Vertikalrichtung gesehen - im vorliegenden Fall in Richtung der Y-Achse 26 - oberhalb des weiteren Tragrahmenelements 38 angeordnet. Um eine weitere Verstellmöglichkeit der Greifereinheit 19a um die Y-Achse 26 durchführen zu können, ist das weitere Tragrahmenelement 38 des Tragrahmens 35 über eine eigene Schwenkanordnung 39 mit dem ersten Tragrahmenelement 37 schwenkbar bzw. drehbar verbunden. Über eine nicht näher bezeichnete Lageranordnung sowie ein Antriebsorgan kann somit das weitere Tragrahmenelement 38 um die Hauptachsenrichtung, nämlich die Y-Achse 26 relativ bezüglich des ersten Tragrahmenelements 37 verschwenkt werden. Dieser Verschwenk- bzw. Verstellweg kann dabei nur einen vorbestimmten, gewissen Winkelbereich oder aber auch den vollen Winkelbereich von 360° betragen. Damit wird es möglich, das weitere Tragrahmenelement 38 relativ bezüglich des ersten Tragrahmenelements 37 um die Schwenkachse 29 und somit um die Y-Achse 26 zu verdrehen. Das erste Tragrahmenelement 37 ist dabei bis auf die Verschwenkmöglichkeit um die Schwenkachse 28 und somit um die X-Achse 25 an der Traganordnung 36 bevorzugt verdrehfest gehalten.

Weiters weist die Greifereinheit 19a zusammenwirkende Greiffinger 40 auf, welche ihrerseits am weiteren Tragrahmenelement 38 um die Schwenkachse 30 zur Verschwenkung um die Z-Achse 27 an dem weiteren Tragrahmenelement 38 gelagert sind. Um in diesem Bereich möglichst geringe Massen bewegen zu müssen, ist es vorteilhaft, wenn die Schwenkachse 30 für die Greiffinger 40 unmittelbar benachbart zu den Greiffingern 40 angeordnet ist.

Die physische Schwenkachse 30 ist dabei derart ausgebildet, dass diese über eine später noch näher beschriebene Antriebsanordnung 54 das von dieser erzeugte Drehmoment und damit die Verstellkraft um die Z-Achse 27 auf die Greiffinger 40 überträgt. Des Weiteren ist es aber auch zur Durchführung der Greifbewegung oder der Freigabebewegung der Greiffinger 40 notwendig, sodass die Greiffinger 40 relativ zueinander in Richtung der Schwenkachse 30 und somit in Richtung der Z-Achse 27 verstellt werden können.

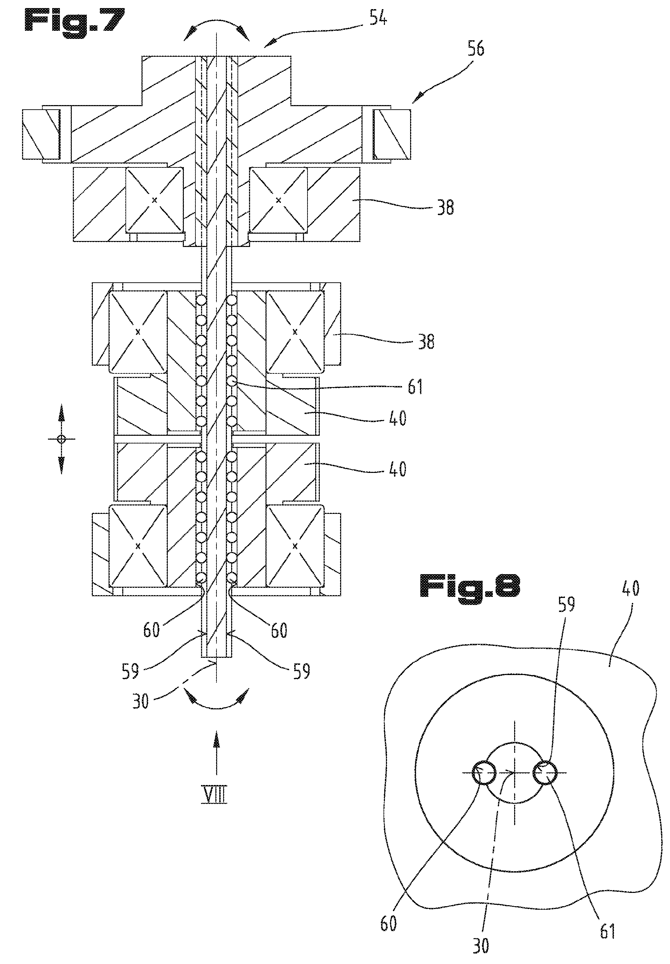

Dazu ist einmal eine drehfeste, insbesondere formschlüssige Verbindung bzw. Halterung zwischen den Greiffingern 40 und der physischen Schwenkachse 30 notwendig. Die Einleitung der Verdrehbewegung auf den oder die Greiffinger 40 kann durch Verdrehen bzw. Verschwenken der physischen Schwenkachse 30 erfolgen. Des Weiteren ist aber auch eine Verschiebebewegung zumindest eines der beiden Greiffinger 40 in Richtung der Schwenkachse 30 zu ermöglichen. Diese Übertragungsmöglichkeit bzw. Längsführung wird nachfolgend in den Fig. 7 und 8 noch näher erläutert.

Der Ordnung halber sei erwähnt, dass die Schwenkachse 30 auch als Schwenkwelle bezeichnet werden kann, da eine Welle in ihrer einfachsten Form ein stabförmiges Maschinenelement ist, das zum Weiterleiten von Drehbewegungen und Drehmomenten sowie auch zur Lagerung von rotierenden Teilen Verwendung findet. Wellen übertragen im Unterschied zu Achsen, die eine reine Trag- oder Lagerfunktion haben, ein Drehmoment. Sie werden daher auch auf Torsion beansprucht. Aus Gründen der Einfachheit werden die schematisch mit strich-punktierten Linien angedeuteten Achsen als Schwenkachsen 28, 29 und 30 bezeichnet, auch wenn diese zur direkten Übertragung von Drehmomenten eingesetzt werden.

Um eine zusätzliche Verstellbewegung der Greiffinger 40 in Richtung der Schwenkachse 30 und somit in Richtung der Z-Achse 27 zu erreichen, sind weitere Führungselemente vorzusehen, um diese Schiebe- bzw. Gleitbewegung an der Schwenkachse 30 durchführen zu können.

Weiters ist hier noch zu ersehen, dass die zwischen den beiden Tragrahmenelementen 37, 38 vorgesehene Schwenkanordnung 39 in Vertikalrichtung gesehen zwischen der die X-Achse 25 bildenden Schwenkachse 28 des ersten Tragrahmenelements 37 und der die Z-Achse 27 bildenden Schwenkachse 30 des weiteren Tragrahmenelements 38 angeordnet ist.

Zur Durchführung der Greifbewegung oder der Freigabebewegung der zusammenwirkenden Greiffinger 40, ist deren relative Verstellung in Richtung der Z-Achse 27 und somit in Richtung der Schwenkachse 30 notwendig. Dazu ist im Bereich der Schwenkanordnung 39 eine Stellanordnung 41 vorgesehen, welche an dem ersten Tragrahmenelement 37 gehalten bzw. damit verbunden ist. Die Stellanordnung 41 umfasst unter anderem ein Stellorgan, welches eine lineare Stellbewegung durchführt, welche in paralleler Richtung bezüglich der Schwenkachse 29 erfolgt. Das Stellorgan kann je nach Anforderung und gewünschter Durchführung der Stellbewegung frei nach dem bekannten Stand der Technik ausgewählt werden.

Am weiteren Tragrahmenelement 38 ist ein in paralleler Richtung bezüglich der Y-Achse 26 verstellbar gelagertes Übertragungselement 42 geführt gelagert. Im vorliegenden Ausführungsbeispiel ist das Übertragungselement 42 im Querschnitt gesehen als kreisringförmiges, umlaufendes Bauteil mit einer Wandstärke ausgebildet. Ein derartiger Bauteil wird auch als Hohlzylinder bzw. scheibenförmig oder aber auch rohrförmig bezeichnet. Dieses Übertragungselement 42 ist mit der Stellanordnung 41 wirkverbunden und kann durch dessen Lagerung am weiteren Tragrahmenelement 38 relativ zu diesem in paralleler sowie linearer Richtung bezüglich Y-Achse 26 und somit relativ zur Schwenkachse 29 verstellt werden. Da dieses Übertragungselement 42 am weiteren Tragrahmenelement 38 gelagert ist, welches seinerseits relativ bezüglich des ersten Tragrahmenelements 37 um die gemeinsame Schwenkachse 29 und somit um die Y-Achse 26 verstellt werden kann, weist dieses Übertragungselement 42 die zuvor beschriebene und bezüglich der Y-Achse 26 rotationssymmetrische Raumform auf.

Um einerseits die Axialbewegung des Übertragungselements 42 in Richtung der Y-Achse 26 und andererseits die Drehbewegung desselben um die Y-Achse 26 durchführen zu können, ist eine entsprechende Vorrichtung zur Übertragung des Verstellhubes von der Stellanordnung 41 auf das Übertragungselement 42 vorzusehen. Dazu weist die Stellanordnung 41, welche hier eine Linearbewegung in Axialrichtung bezüglich der Y-Achse 26 durchführt, eine Eingriffsvorrichtung 43 auf, welche einerseits mit der Stellanordnung 41 und andererseits mit dem Übertragungselement 42 in Wirkverbindung steht. Diese Eingriffsvorrichtung 43 ist derart ausgebildet, dass das Übertragungselement 42 die Drehung um die Y-Achse 26 durchführen kann und trotzdem die Verstellung in Richtung der Y-Achse 26 möglich ist. Bevorzugt wird bei der Eingriffsvorrichtung 43 eine klauenförmige Ausbildung gewählt, wobei die Klauen am Übertragungselement 42 an den in Axialrichtung voneinander abgewendeten Stellflächen angreifen und die Eingriffsvorrichtung 43 bzw. die Klauen weiters mit der Stellanordnung 41 gekuppelt bzw. verbunden sind. Um eine leichtgängige Rotations- bzw. Schwenkbewegung des Übertragungselements 42 im Bereich der Klauen durchführen zu können, weist die Eingriffsvorrichtung 43 zumeist ein scheibenförmig ausgebildetes Lagerelement 49 auf. So kann beispielsweise auf einer der Stellanordnung 41 zugewendeten Seite des Übertragungselements 42 eine Wälzlageranordnung mit zumindest einem, bevorzugt zwei oder mehreren in Umfangsrichtung voneinander distanzierten, Lagerelementen 49 vorgesehen sein. Damit bildet das Lagerelement eine der Klauen aus.

Auf einer von der Stellanordnung 41 abgewendeten Seite des Übertragungselements 42 sind hakenförmig ausgebildete Eingriffselemente 44 vorgesehen, welche den äußeren Umfang des Übertragungselements 42 hin in Richtung auf die Y-Achse 26 übergreifen. Dieses Eingriffselement 44 bildet die weitere am Übertragungselement 42 angreifende Klaue. Bevorzugt ist jedem Eingriffselement 44 gegenüberliegend ein Lagerelement 49 angeordnet. Somit ist das Übertragungselement 42 in Richtung der Y-Achse 26 gesehen zwischen dem Lagerelement 49 und dem Eingriffselement 44 angeordnet. Damit liegt je nach eingestelltem Spiel das Übertragungselement 42 am Lagerelement 49 der Wälzlageranordnung und/oder dem Eingriffselement 44 an. Dadurch wird es möglich, den durchzuführenden Verstellhub ausgehend von der Stellanordnung 41 auf das Übertragungselement 42 in Axialrichtung in beiden Verstellrichtungen auf das Übertragungselement 42 übertragen bzw. weiterleiten zu können. Bevorzugt wird eine zumeist spielfreie Übertragung der Verstellbewegung in Richtung der Y-Achse 26 angestrebt.

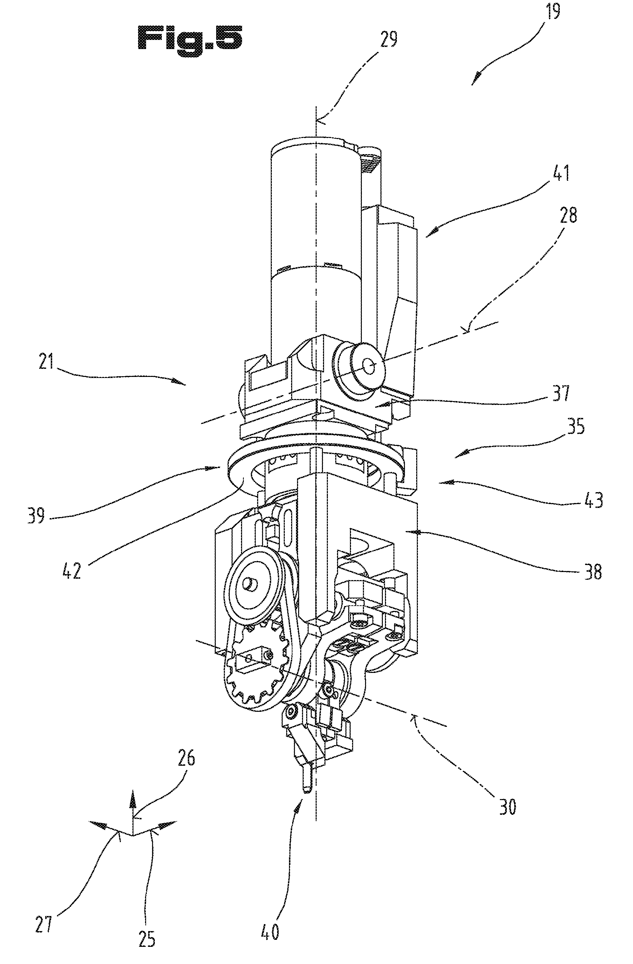

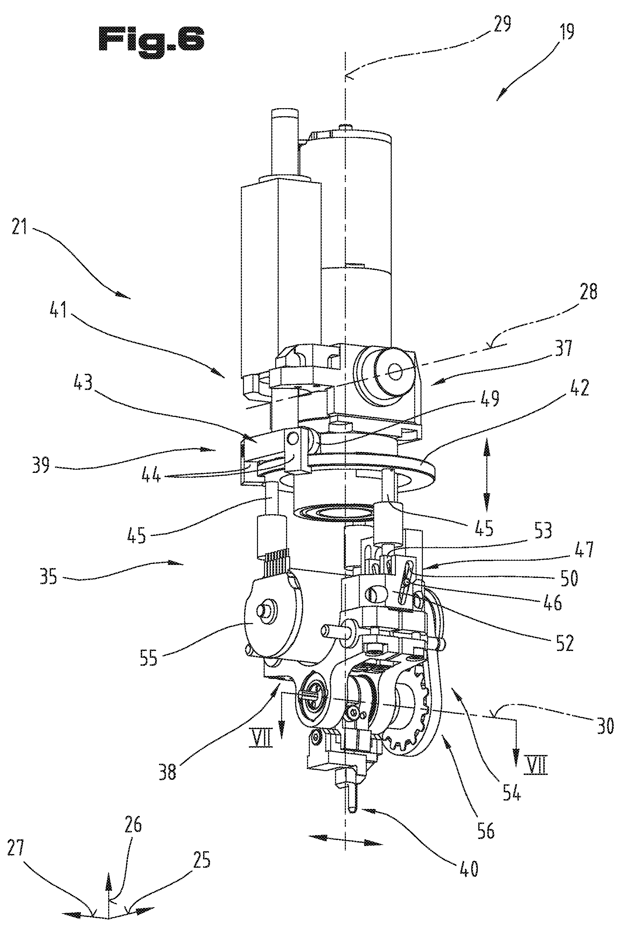

Weiters ist nun besser aus den Fig. 5 und 6 zu ersehen, dass am Übertragungselement 42 über den Umfang verteilt, mehrere Führungsstangen 45 vorgesehen bzw. daran angeordnet sind, welche ihrerseits im weiteren Tragrahmenelement 38 geführt gelagert sind. Dabei kann es sich um beliebig ausgeführte Axiallager handeln, mit welchen das Übertragungselement 42 über die Führungsstangen 45 am hier unteren Tragrahmenelement 38 des Tragrahmens 35 geführt gelagert und damit auch relativ zu diesem verstellbar ist. Die Lager sind durch das Ausblenden von Bauteilen des Tragrahmens 35 in der Darstellung der Fig. 6 zu ersehen, welche von den Führungsstangen 45 durchsetzt sind.

Die Führungsstangen 45 erstrecken sich in paralleler Richtung bezüglich der Schwenkachse 29 bzw. der Y-Achse 26. An zumindest einer der Führungsstangen 45 ist zumindest ein zusätzliches zapfenförmiges Stellelement 46 in Radialrichtung vorragend angeordnet, welches seinerseits mit einer Kulissenanordnung 47 in Wirkverbindung steht bzw. in die dort vorgesehene zumindest eine Kulissenbahn 50 und/oder 51 eingreift. Im vorliegenden Ausführungsbeispiel sind zwei Kulissenbahnen vorgesehen, wobei jede der Kulissenbahnen 50, 51 an einem in Richtung der Z-Achse 27 relativ bezüglich des unteren Tragrahmenelements 38 verschiebbar geführten Stellteil 52, 53 angeordnet bzw. ausgebildet ist.

Jeder der Greiffinger 40 steht somit über den jeweiligen eigenen Stellteil 52, 53 sowie dem in die Kulissenbahn 50, 51 eingreifenden Stellelement 46 und in weiterer Folge mit dem Übertragungselement 42 für die für die Greif- bzw. Freigabebewegung durchzuführenden Verstellvorgänge in Antriebsverbindung. Die beiden Kulissenbahnen 50, 51 sind zueinander noch gegenläufig verlaufend ausgebildet. Durch die Schrägstellung der Kulissenbahnen 50, 51 bezüglich der von der Stellanordnung 41 durchgeführten Hubbewegung in paralleler Richtung bezüglich der Y-Achse 26 kommt es zu der zuvor beschriebenen Greifbewegung der Greiffinger 40 in Richtung der Z-Achse 27. Dadurch können die Greiffinger 40 bevorzugt synchron aufeinander zu oder voneinander weg bewegt werden. Damit wird es möglich, über die Eingriffsvorrichtung 43 den linearen Verstellhub des Stellorgans der Stellanordnung 41 auf das Übertragungselement 42 und in weiterer Folge auf die zumindest eine Führungsstange 45 mit dem davon vorragenden Stellelement 46 übertragen zu können. So kann ein parallel bezüglich der Y-Achse 26 ausgerichteter Verstellhub über die Kulissenanordnung 47 in eine in paralleler Richtung bezüglich der Z-Achse 27 bzw. der Schwenkachse 30 sowie auch noch gegebenenfalls in eine gegenläufig zueinander ausgerichtete Verstellbewegung der Greiffinger 40 umgesetzt werden. Durch das Zusammenwirken des Stellelements 46 mit der Kulissenanordnung 47, kann dann mit geringstem Platzbedarf die Verstellbewegung für die Greifsowie Freigabebewegung durchgeführt werden.

Dadurch wird es möglich, bei einem sehr geringen Platzbedarf, die Verstellbewegungen der Greiffinger 40 im Bereich der gemeinsame Z-Achse 27 bzw. Schwenkachse 30 sowohl für die Durchführung der Verschwenkbewegung der Greiffinger 40 um die Z-Achse 27, als auch in Richtung derselben für die Durchführung der Greifbewegung durchführen zu können. So wird das eher knapp zur Verfügung stehende Raumangebot optimal ausgenützt. Darüber hinaus werden die zu bewegenden Massen im Bereich der Greiffinger 40 sowie der gesamten Schwenkachseneinheit 21 gering gehalten.

Die Schwenkbewegung der Greiffinger 40 um die Z-Achse 27 bzw. Schwenkachse 30 erfolgt mittels einer eigenen Antriebsanordnung 54. Im vorliegenden Ausführungsbeispiel umfasst die Antriebsanordnung 54 einen Antriebsmotor 55, welcher z.B. über einen Zugmitteltrieb 56 mit der physischen Schwenkachse 30 in Antriebsverbindung steht. Der Zugmitteltrieb 56 umfasst bei diesem Ausführungsbeispiel unter anderem ein auf der Schwenkachse 30 drehfest gehaltenes Zahnrad, welches über einen Zahnriemen mit dem Antriebsmotor in Antriebsverbindung steht. Es wären aber auch andere Antriebmittel denkbar, mit welchen eine Erzeugung sowie Übertragung des Antriebsmomentes auf die Schwenkachse 30 erfolgt. Auf der Schwenkachse 30 sind die Greiffinger 40 nicht nur drehfest gehalten sondern auch noch zusätzlich in Axialrichtung verschiebbar geführt gelagert.

Diese kombinierte Übertragung von Drehmomenten auf die Greiffinger 40 sowie die Schiebebewegung der Greiffinger 40 auf der Schwenkachse 30 kann einerseits durch eine formschlüssige Drehverbindung sowie andererseits durch einen Schiebe- bzw. Gleitsitz erfolgen. Dabei kann die drehfeste bzw. formschlüssige Drehverbindung zwischen den Greiffingern 40 und der Schwenkachse 30 z.B. durch eine Keilwelle, Mehreckwelle, Passfederverbindung oder aber auch durch eine formschlüssige Kugelführung erfolgen, wie dies vereinfacht in den Fig. 7 und 8 gezeigt ist. Diese hier gezeigte und beschriebene Ausführungsform der kombinierten drehfesten, jedoch längsverschieblichen Lagerung, kann gegebenenfalls für sich eine eigenständige erfindungsgemäße Lösung darstellen. Damit wird für die Greiffinger 40 auf engstem Raum eine hohe Flexibilität für die unterschiedlichsten durchzuführenden Greifsowie Freigabebewegungen in den dafür notwendigen verschiedenen Greifpositionen geschaffen. Mit dieser Ausführung können unabhängig voneinander die beiden Verstellbewegungen durchgeführt werden, wobei die Verstellbewegungen auch noch gleichzeitig erfolgen können.

Um auch zusätzlich noch eine leichtgängige Längsverschiebung des oder der Greiffinger 40 bzw. einer hier nicht näher bezeichneten und zwischen der Schwenkachse 30 und dem jeweiligen Greiffinger 40 vorgesehenen Distanzhülse an der Schwenkachse 30 zu ermöglichen, könnte in einander zugewendeten Lagerflächen 57, 58 der Greiffinger 40 bzw. auch der Distanzhülse oder einem Zwischenbauteil und der physischen Schwenkachse 30 jeweils zumindest eine nutförmige Vertiefung 59, 60 angeordnet sein. In diesen unmittelbar gegenüberliegend angeordneten Vertiefungen 59, 60 sind die Lager- und Rastelemente z.B. in Form von Kugeln 61 zur Bildung der Kugelführung eingesetzt. Dazu weist die jeweilige Vertiefung 59, 60 sowohl in der Schwenkachse 30 als auch dem Greiffinger 40 bzw. der dazwischen angeordneten Distanzhülse eine bezüglich der Kugelform dazu gegengleiche Querschnittsform auf.

Bei einer sich in Axialrichtung bezüglich der Z-Achse 27 und damit der Schwenkachse 30 erstreckenden Ausrichtung der Vertiefungen 59, 60 kann nicht nur eine drehfeste Verbindung zwischen der physischen Schwenkachse 30 und den Greiffingern 40 erzielt werden sondern auch noch eine zusätzliche Verschiebebewegung der Greiffingern 40 in Axialrichtung an der physischen Schwenkachse 30 als Rollführung durch die Kugeln 61 erfolgen. Diese Längsführung kann als Kugelrollführung oder aber auch als Kugelumlaufführung bezeichnet werden.

Bei entsprechender Passungswahl kann zwischen der äußeren Oberfläche der Schwenkachse 30 und dem darauf längsverschieblich gelagerten Greiffinger 40 bzw. der Zwischenhülse die Reibung soweit reduziert werden, dass die Längsführung nahezu bis ausschließlich durch die Kugelführung erfolgt, welche auch noch zusätzlich die Momentübertragung für die Durchführung der Schwenkbewegung übernimmt.

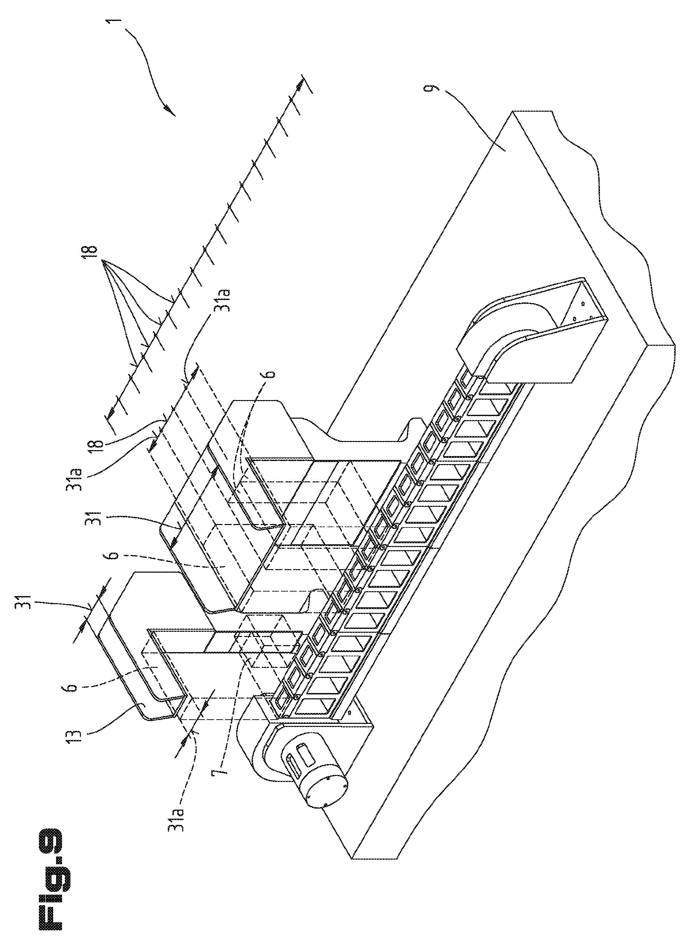

Die Fig. 9 zeigt in einer schematischen Darstellung mögliche Ausführungsbeispiele, wie die Lagerrahmenmodule 13 an der Fertigungsanlage 1, beziehungsweise die Arbeitsstationen 6 innerhalb der Lagerrahmenmodule 13 angeordnet sein können.

Die Fertigungsanlage 1 umfasst ein Traggehäuse 9, welches aus mehreren Tragrahmenmodulen 65 bis 68 und den Tragrahmenmodulen 63 und 64, die in den beiden stirnseitigen Endbereichen der Fertigungsanlage 1 angeordnet sind, zusammengesetzt ist. Jedes dieser Tragrahmenmodule 65 bis 68 weist eine Breite 69 in Transportrichtung 5 auf, die der vierfachen Breite 31a der Mindestbreite einer Arbeitsstation 6 entspricht.

Über diese Breite 69 der Tragrahmenmodule 65 bis 68 können somit maximal bis zu vier Arbeitsstationen 6 angeordnet werden, wobei diese auf zumindest einem Lagerrahmenmodul 13 mit der entsprechenden Breite 31 in Transportrichtung 5, oder auf mehreren unmittelbar nebeneinander angeordneten, bzw. aneinander liegenden Lagerrahmenmodulen 13 angeordnet sein können.

Grundsätzlich, ist es möglich, dass pro Lagerrahmenmodul 13 maximal bis zu vier Arbeitsstationen 6 angeordnet sind. Zusätzlich kann vorgesehen sein, dass maximal bis zu vier Teilebereitstellungsstationen 7 in einem Lagerrahmenmodul 13 angeordnet sind. Die Anzahl der in einem Lagerrahmenmodul 13 anordenbaren Arbeitsstationen 6 bzw. Teilebereitstellungsstationen 7 ist im Wesentlichen davon abhängig, welche Breite 31 das Lagerrahmenmodul 13 im Vergleich zur Breite 31a einer Arbeitsstation 6 aufweist. Es ist vorteilhaft möglich, dass die Breite 31a einer Arbeitsstation 6 zumindest der Breite 31 eines Lagerrahmenmodules 13 entspricht, und zwar in jenen Bereichen, in denen sich die Arbeitsstation 6 nicht mit den Seitenwänden 33 des Lagerrahmenmoduls 13 überdeckt. In jenen Bereichen, in welchen sich im zusammengebauten Zustand Teile der Arbeitsstation 6 innerhalb der Seitenwände 33 der Lagerrahmenmodule 13 befinden, ist die verfügbare Breite für die Arbeitsstation 6 gegenüber dem Außenmaß der Lagerrahmenmodule 13 um die doppelte Wandstärke der Seitenwände 33 geringer. Das heißt von der Distanz zwischen den voneinander abgewendeten Oberflächen der Seitenwände 33 des Lagerrahmenmoduls 13, welche als Breite 31 bezeichnet wird, muss die doppelte Wandstärke der Seitenwände 33 abgezogen werden, um die lichte Weite eines Lagerrahmenmodules 13 zu erhalten. Hierdurch ist es möglich, auch mehrere Arbeitsstationen 6 in einem Lagerrahmenmodul 13 anzuordnen.

Ist beispielsweise die Breite 31 eines Lagerrahmenmodules 13 viermal so groß, wie die Breite 31a einer Arbeitsstation 6, so können prinzipiell vier Arbeitsstationen 6 innerhalb eines einzigen Lagerrahmenmodules 13 angeordnet sein. Dabei ergibt sich eine mögliche Anordnungsposition der einzelnen Arbeitsstationen 6 innerhalb des Lagerrahmenmodules 13, welche dem Rasterabstand 18 entspricht.

Es ist jedoch beispielsweise möglich, nur an einer oder zwei Positionen eines Lagerrahmenmodules 13 eine Arbeitsstation 6 anzuordnen. Beispielsweise kann vorgesehen sein, dass innerhalb des Lagerrahmenmodules 13 ein oder mehrere Felder, mit der Breite 31a einer Arbeitsstation 6, welches für die Anordnung einer Arbeitsstation 6 vorgesehen ist, frei bleiben.

Die folgenden Bezeichnungen linker und rechter Abschnitt, bzw. linker und rechter Rand, beziehen sich auf die in der Fig. 9 dargestellte Ansicht, wobei mit links linksseitig des im Querformat betrachteten Blattes gemeint ist.

Wie in Fig. 9 im linken Abschnitt dargestellt, kann ein Lagerrahmenmodul 13 eine Breite 31 aufweisen, welche gleich groß ist, wie die Breite 31a einer Arbeitsstation 6. Somit kann in diesem Lagerrahmenmodul 13 nur eine Arbeitsstation 6 innerhalb des Lagerrahmenmodules 13 angeordnet sein. Zusätzlich zu der Anordnung einer Arbeitsstation 6 innerhalb dieses Lagerrahmenmodules 13 kann auch bevorzugt vorgesehen sein, dass innerhalb dieses Lagerrahmenmodules 13 eine Teilebereitstellungsstation 7 angeordnet ist.

Der mittlere Abschnitt einer in Fig. 9 schematisch dargestellten Fertigungsanlage 1 zeigt ein Lagerrahmenmodul 13 in welchem die Breite 31 so gewählt wurde, dass grundsätzlich vier Arbeitsstationen 6 innerhalb des Lagerrahmenmodules 13 angeordnet sein können. In diesem Ausführungsbeispiel sind jedoch nur drei Arbeitsstationen 6 innerhalb des Lagerrahmenmodules 13 angeordnet. Diese drei Arbeitsstationen 6 sind hierbei so angeordnet, dass eine Arbeitsstation 6 am linken Rand des Lagerrahmenmodules 13, und die beiden weiteren Arbeitsstationen 6 am gegenüberliegenden, rechten Rand des Lagerrahmenmodules 13 angeordnet sind. Somit besteht die Möglichkeit in diesem Lagerrahmenmodul 13 noch eine weitere Arbeitsstation 6 anzuordnen. Aus Gründen der Übersichtlichkeit sind in diesem Lagerrahmenmodul 13 keine Teilebereitstellungsstationen 7 dargestellt. Natürlich besteht jedoch auch die Möglichkeit, dass zusätzlich zu den Arbeitsstationen 6 auch bis zu vier Teilebereitstellungsstationen 7 in diesem Lagerrahmenmodul 13 angeordnet sind.

Auch bei der Anordnung der einzelnen Lagerrahmenmodule 13 gibt es verschiedene Möglichkeiten, wie diese zueinander angeordnet sein können. Beispielsweise besteht die Möglichkeit, dass die einzelnen Lagerrahmenmodule 13 unmittelbar benachbart zueinander angeordnet sind. Weiters besteht auch die Möglichkeit, dass die Lagerrahmenmodule 13 beabstandet zueinander angeordnet sind. In diesem Fall wird der Abstand der einzelnen Lagerrahmenmodule 13 so groß gewählt, dass er dem ein- oder mehrfachen der Breite 31a einer Arbeitsstation 6 entspricht, was wiederum den Rasterabstand 18 ergibt.

Die beiden Lagerrahmenmodule 13, in der in Fig. 9 schematisch dargestellten Fertigungsanlage 1 sind so zueinander angeordnet, dass sie beabstandet zueinander angeordnet sind. Der hier dargestellte Abstand zwischen den Lagerrahmenmodulen beträgt einer vierfachen Breite 31a einer Arbeitsstation 6. Demnach könnte noch ein weiteres Lagerrahmenmodul 13 mit einer maximalen Kapazität von vier Arbeitsstationen 6 in den Leerraum zwischen diesen beiden Lagerrahmenmodulen 13 eingefügt werden. Alternativ dazu ist es auch denkbar, dass beispielsweise vier Lagerrahmenmodule 13 mit einer maximalen Kapazität von jeweils einer Arbeitsstation 6 in den Leerraum zwischen diesen beiden Lagerrahmenmodulen 13 eingefügt werden. Diese Lagerrahmenmodule 13 können nun teilweise oder auch vollständig mit Arbeitsstationen 6 bestückt sein.

Natürlich kann auch vorgesehen sein, dass im rechten Abschnitt der Fertigungsanlage 1 in Fig. 9 weitere Lagerrahmenmodule 13 platziert werden.

Die Fertigungsanlage 1 ist darüber hinaus mit einer Steuervorrichtung versehen, vorzugsweise einer selbst programmierbaren elektronischen Steuerung oder einem PC oder einem sonstigen Mikroprozessor mit dem die Antriebe der Transportanlage 2 sowie die einzelnen Einheiten der Greifereinheit 19a, insbesondere die Schwenkanordnungen 39, die Stellanordnung 41, die Stellteile 52, 52 sowie die Antriebsanordnung 54 und der Antriebsmotor 55 sowie bevorzugt auch der Zugmitteltrieb 56 angesteuert und deren Funktion auf den jeweiligen Bewegungsablauf abgestimmt werden können. Vor allem ist es vorteilhaft, wenn diese Steuereinrichtung den für die Arbeitseinheit 19 verfügbaren Arbeitsbereich 32 überwacht und die Bewegungen der Greifereinheit 17a so steuert, dass kein Teil der Greifeinheit 19a die maximale Breite eines Lagerrahmenmoduls 13, also die größte äußere Breite zwischen den voneinander abgewendeten Oberflächen der Seitenwände 33 derselben, bzw. die Breite 31a der jeweiligen Arbeitsstation 6 überschreiten. Durch diese spezielle Ausführung der Steuervorrichtung ist es möglich, Kollisionen der Bauteile der Arbeitseinheit 19 bzw. der Greifeinheit 19a mit denjenigen einer unmittelbar benachbarten Arbeitseinheit 19 in einem Lagerrahmenmodul 13 zu verhindern.

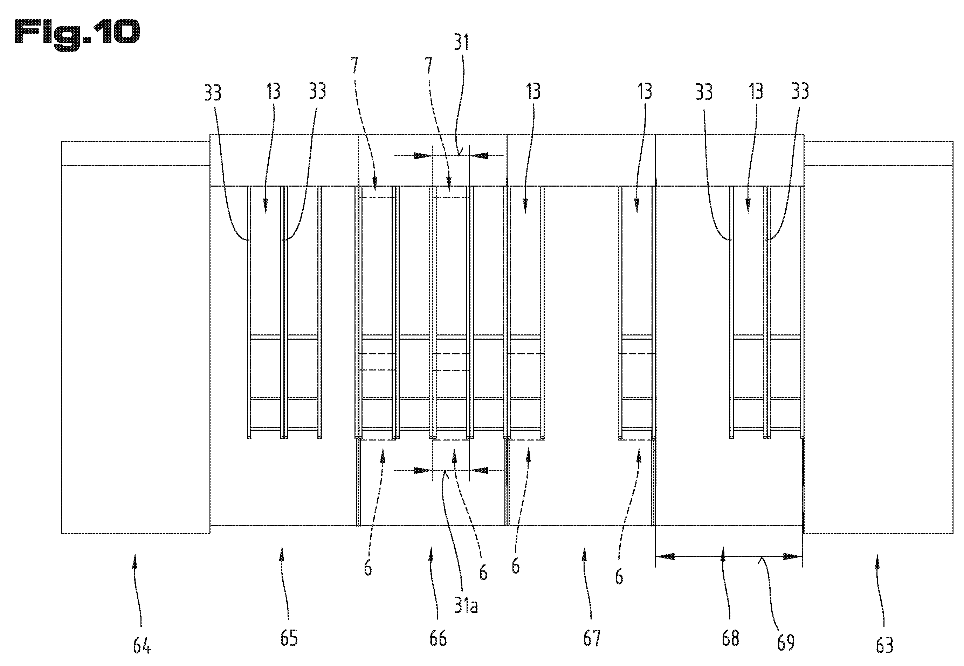

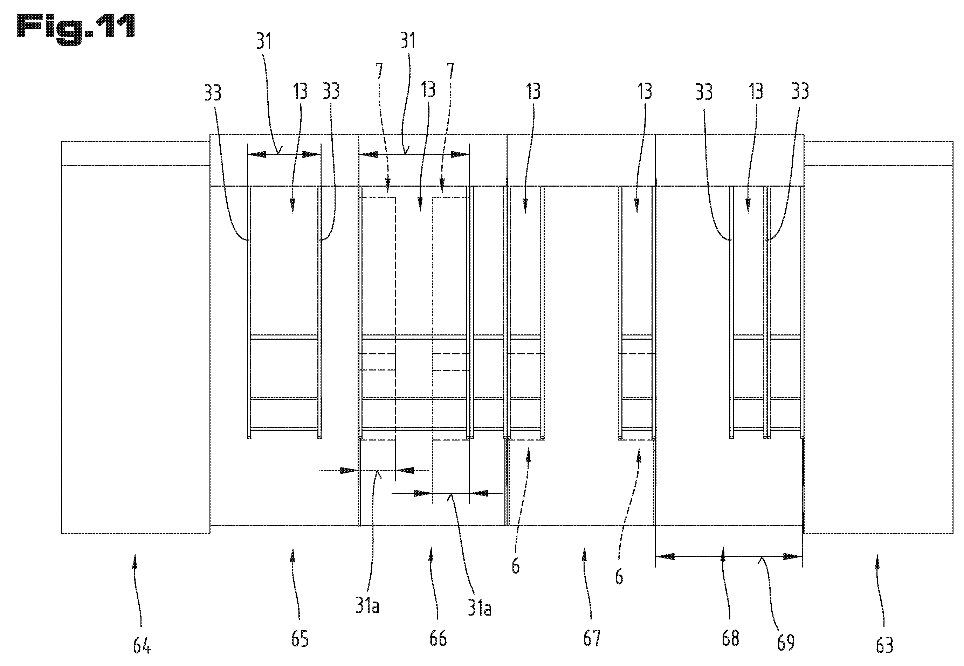

In Fig. 10 und Fig. 11 ist zur Veranschaulichung der möglichen Anordnung von Lagerrahmenmodulen 13 am Traggehäuse 9 bzw. von Arbeitsstationen 6 und Teilebereitstellungsstationen 7 an den Lagerrahmenmodulen 13 eine schematische Draufsicht gezeigt, in der verschiedene mögliche Anordnungen und Kombinationen dargestellt werden.

In der Ausführungsvarinate in Fig. 10 sind hierbei mehrere Lagerrahmenmodule 13, welche eine gleiche Breite 31, wie die Breite 31a der Arbeitsstationen 6 aufweisen, an den einzelnen Tragrahmenmodulen 65 bis 68 angeordnet. Am ersten Tragrahmenmodul 65 sind hierbei zwei Lagerrahmenmodule 13 mittig angeordnet, an welchen jedoch noch keine Arbeitsstationen 6, bzw. Teilebereitstellungsstationen montiert sind.

Am zweiten Tragrahmenmodul 66 sind hierbei vier Lagerrahmenmodule 13 montiert, sodass alle möglichen Positionen am Tragrahmenmodul 66 an denen ein Lagerrahmenmodul 13 montiert werden kann, auch mit einem Lagerrahmenodul 13 besetzt sind. Hierbei sind jedoch von links gesehen nur am ersten und am dritten Lagerrahmenmodul 13 auch Arbeitsstationen 6 bzw. Teilebereitstellungsstationen 7 angeordnet.

Am dritten bzw. am vierten Tragrahmenmodul 67 und 68 sind weitere mögliche Anordnungen von Lagerrahmenmodulen 13, bzw. daran angeordneten Arbeitsstationen 6 und Teilebereitstellungsstationen 7 dargestellt.

In der Ausführungsvarinate in Fig. 11 sind hierbei mehrere Lagerrahmenmodule 13, welche teilweise eine mehrfache Breite 31, im Vergleich zur Breite 31a der Arbeitsstationen 6 aufweisen, an den einzelnen Tragrahmenmodulen 65 bis 68 angeordnet. Auch hier sind verschiedene unterschiedliche Anordnungsmöglichkeiten dargestellt. Hierbei ist am ersten Tragrahmenmodul 65 mittig ein Lagerrahmenmodul 13 angeordnet, welches die doppelte Breite einer Arbeitsstation 6 aufweist. Somit können zwei Arbeitsstationen 6 in diesem Lagerrahmenmodul 13 aufgenommen werden.

Am zweiten Tragrahmenmodul 66 sind zwei Lagerrahmenmodule 13 montiert, wobei ein Lagerrahmenmodul die dreifache Breite 31a einer Arbeitsstation 6 aufweist, sodass alle möglichen Positionen am Tragrahmenmodul 66 an denen ein Lagerrahmenmodul 13 montiert werden kann, auch mit einem Lagerrahmenodul 13 besetzt sind. Hierbei sind jedoch von links gesehen am ersten Lagerrahmenmodul 13 an der ersten Position und weiters am zweiten Lagerrahmenmodul 13, auch Arbeitsstationen 6 bzw. Teilebereitstellungsstationen 7 angeordnet.

Am dritten bzw. am vierten Tragrahmenmodul 67 und 68 sind weitere mögliche Anordnungen von Lagerrahmenmodulen 13, bzw. daran angeordneten Arbeitsstationen 6 und Teilebereitstellungsstationen 7 dargestellt.

Die Darstellung der verschieden Anordnungsmöglichkeiten soll keine Beschränkung dieser sein, sondern ist nur zur Veranschaulichung von verschiedenen Möglichkeiten gedacht.

Der Ordnung halber sei abschließend darauf hingewiesen, dass zum besseren Verständnis des Aufbaus der Fertigungsanlage 1 diese bzw. deren Bestandteile teilweise unmaßstäblich und/oder vergrößert und/oder verkleinert dargestellt wurden. Die Schwenkachsen 28, 29, 30 sind in den Zeichnungen zumeist als imaginäre Achsen eingezeichnet, können aber auch durch unterschiedlichste körperliche bzw. physische Achsen gebildet sein.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Fertigungsanlage 1, wobei an dieser Stelle bemerkt sei, dass die Erfindung nicht auf die speziell dargestellten Ausführungsvarianten derselben eingeschränkt ist und der Schutzumfang durch die Ansprüche definiert wird.

**Bezugszeichenaufstellung**

| | | | |
|---|---|---|---|
| 1 | Fertigungsanlage | 36 | Traganordnung |
| 2 | Transportanlage | 37 | Tragrahmenelement |
| 3 | Teil | 38 | Tragrahmenelement |
| 4 | Teileträger | 39 | Schwenkanordnung |
| 5 | Transportrichtung | 40 | Greiffinger |
| | | | |
| 6 | Arbeitsstation | 41 | Stellanordnung |
| 7 | Teilebereitstellungsstation | 42 | Übertragungselement |
| 8 | Grundrahmen | 43 | Eingriffsvorrichtung |
| 9 | Traggehäuse | 44 | Eingriffselement |
| 10 | Boden | 45 | Führungsstange |
| | | | |
| 11 | Anschlussebene | 46 | Stellelement |
| 12 | Rahmenkonstruktion | 47 | Kulissenanordnung |
| 13 | Lagerrahmenmodul | 48 | Linearführung |
| 14 | Aufnahmeöffnung | 49 | Lagerelement |
| 15 | Längstraverse | 50 | Kulissenbahn |
| | | | |
| 16 | Handhabungsvorrichtung | 51 | Kulissenbahn |
| 17 | Transportabschnitt | 52 | Stellteil |
| 18 | Rasterabstand | 53 | Stellteil |
| 19 | Arbeitseinheit | 54 | Antriebsanordnung |
| 19a | Greifereinheit | 55 | Antriebsmotor |
| 20 | Linearführungseinheit | | |
| | | 56 | Zugmitteltrieb |
| 21 | Schwenkachseneinheit | 57 | Lagerfläche |
| 22 | Linearführung | 58 | Lagerfläche |
| 23 | Linearführung | 59 | Vertiefung |
| 24 | Linearführung | 60 | Vertiefung |
| 25 | X-Achse | | |
| | | 61 | Kugel |
| 26 | Y-Achse | | |
| 27 | Z-Achse | 63 | Tragrahmenmodul |
| 28 | Schwenkachse | 64 | Tragrahmenmodul |
| 29 | Schwenkachse | 65 | Tragrahmenmodul |
| 30 | Schwenkachse | 66 | Tragrahmenmodul |
| | | 67 | Tragrahmenmodul |
| 31 | Breite | | |
| | 31 a Breite | 68 | Tragrahmenmodul |
| 32 | Arbeitsbereich | 69 | Breite |
| 33 | Seitenwand | 70 | Stützvorrichtung |
| 34 | Verbindungsbauteil | | |
| 35 | Tragrahmen | | |

## Patentansprüche

1. Fertigungsanlage (1) zur Herstellung einer Baugruppe aus mehreren Teilen (3), umfassend eine Transportanlage (2) zur Beförderung der Teile (3) mittels Teileträgern (4), mehrere Arbeitsstationen (6), welche in Transportrichtung (5) entlang eines Transportabschnitts (17) der Transportanlage (2) in einem Rasterabstand (18) hintereinander angeordnet sind, wobei zumindest einzelne Lagerrahmenmodule (13) vorgesehen sind, welche zumindest eine Arbeitsstation (6) mit einer an dieser Arbeitsstation (6) gelagerten Handhabungsvorrichtung (16) aufweisen, wobei die Lagerrahmenmodule (13) jeweils eine Breite (31) und die Arbeitsstationen (6) jeweils eine Breite (31a) in Transportrichtung (5) des Transportabschnitts (17) aufweisen und die Handhabungsvorrichtung (16) weiters eine Arbeitseinheit (19), insbesondere eine Greifereinheit (19a), aufweist, die über eine Linearführungseinheit (20) sowie eine Schwenkachseneinheit (21) relativ bezüglich der Arbeitsstation (6) verstellbar ist, wobei die Linearführungseinheit (20) mehrere eigene Linearführungen (22, 23, 24) mit Antrieben zur jeweiligen Verstellung der Arbeitseinheit (19) in eine der drei unterschiedlichen Hauptachsenrichtungen (25, 26, 27) und die Schwenkachseneinheit (21) mehrere eigene Schwenkantriebe mit Schwenkachsen (28, 29, 30) zur jeweiligen Verstellung der Arbeitseinheit (19) um eine der drei unterschiedlichen Hauptachsenrichtungen (25, 26, 27) umfasst, und wobei die Linearführungen (22,23,24) der Linearführungseinheit (20) distanziert von den Schwenkachsen (28, 29, 30) der Schwenkachseneinheit (21) angeordnet sind, **dadurch gekennzeichnet, dass** zumindest zwei der Arbeitsstationen (6) wahlweise einander unmittelbar benachbart, oder in einem Abstand zueinander angeordnet sind, welcher Abstand dem ein-oder mehrfachen der Breite (31 a) einer Arbeitsstation (6) entspricht, wobei die Handhabungsvorrichtung (16) mit der Arbeitseinheit (19) in Transportrichtung (5) des Transportabschnitts (17) einen maximalen Arbeitsbereich (32) aufweist, welcher der Breite (31a) der Arbeitsstation (6) entspricht.

2. Fertigungsanlage (1) nach Anspruch 1, **dadurch gekennzeichnet, dass** entlang des Transportabschnittes (17) mehrere Lagerrahmenmodule (13) angeordnet sind, wobei zusätzlich zu zwei einander unmittelbar benachbarten Lagerrahmenmodulen (13) zumindest ein weiteres Lagerrahmenmodul (13) angeordnet ist, welches zu einem der anderen Lagerrahmenmodule (13) mit einem Abstand angeordnet ist, der dem ein-oder mehrfachen der Breite (31) des schmälsten Lagerrahmenmodules (13) entspricht.

3. Fertigungsanlage (1) nach Anspruch 2, dadurch gekenntzeichnet, dass die Schwenkachseneinheit (21) im Bereich der Arbeitseinheit (19) angeordnet ist.

4. Fertigungsanlage (1) nach einem der vorhergehenden Ansprüche, **dadurch gekennzeichnet, dass** die Schwenkachseneinheit (21) für jede der einzelnen Hauptachsenrichtungen (25, 26, 27) eine eigene Schwenkachse (28, 29, 30) mit jeweils einem eigenen Schwenkantrieb aufweist.

5. Fertigungsanlage (1) nach einem der vorhergehenden Ansprüche, **dadurch gekennzeichnet, dass** die Arbeitseinheit (19) einen Tragrahmen (35) umfasst, welcher über eine Traganordnung (36) mit der Linearführungseinheit (20) bewegungsverbunden ist und an dem Tragrahmen (35) die Schwenkachsen (28, 29, 30) der Schwenkachseneinheit (21) angeordnet sind.

6. Fertigungsanlage (1) nach Anspruch 5, **dadurch gekennzeichnet, dass** der Tragrahmen (35) mehrere Tragrahmenelemente (37, 38) aufweist, von denen ein erstes Tragrahmenelement (37) relativ bezüglich der Traganordnung (36) an dieser um die Schwenkachse (28) zur Verschwenkung um die X-Achse (25) verschwenkbar gelagert ist.

7. Fertigungsanlage (1) nach Anspruch 5 oder 6, **dadurch gekennzeichnet, dass** zwischen den den Tragrahmen (35) bildenden ersten und weiteren Tragrahmenelementen (37, 38) eine Schwenkanordnung (39) angeordnet ist, mittels welcher das weitere Tragrahmenelement (38) relativ bezüglich des ersten Tragrahmenelements (37) um die Schwenkachse (29) zur Verschwenkung um die Y-Achse (26) verschwenkbar gelagert ist.

8. Fertigungsanlage (1) nach einem der Ansprüche 5 bis 7, **dadurch gekennzeichnet, dass** die Arbeitseinheit (19) eine Greifereinheit (19a) mit zusammenwirkenden Greiffingern (40) aufweist und die Greiffinger (40) mittels der Schwenkachse (30) am weiteren Tragrahmenelement (38) zur Verschwenkung um die Z-Achse (27) gelagert sind, wobei die Schwenkachse (30) für die Greiffinger (40) unmittelbar benachbart zu den Greiffingern (40) angeordnet ist.

9. Fertigungsanlage (1) nach Anspruch 8, **dadurch gekennzeichnet, dass** die Greiffinger (40) einerseits drehfest mit der Schwenkachse (30) verbunden und andererseits auf der Schwenkachse (30) in Axialrichtung verschiebbar gelagert sind.

10. Fertigungsanlage (1) nach einem der Ansprüche 5 bis 9, **dadurch gekennzeichnet, dass** die zwischen den beiden Tragrahmenelementen (37, 38) angeordnete Schwenkanordnung (39) in Vertikalrichtung gesehen zwischen der die X-Achse (25) bildenden Schwenkachse (28) des ersten Tragrahmenelements (37) und der die Z-Achse (27) bildenden Schwenkachse (30) angeordnet ist.

11. Fertigungsanlage (1) nach einem der Ansprüche 5 bis 10, **dadurch gekennzeichnet, dass** im Bereich der Schwenkanordnung (39) eine Stellanordnung (41) vorgesehen ist, welche am ersten Tragrahmenelement (37) gehalten ist und über ein am weiteren Tragrahmenelement (38) in paralleler Richtung bezüglich der Y-Achse (26) verstellbar gelagertes Übertragungselement (42) einen parallel bezüglich Y-Achse (26) ausgerichteten Verstellhub über eine Kulissenanordnung (47) in eine in paralleler Richtung bezüglich der Z-Achse (30) sowie in eine gegenläufig zueinander ausgerichtete Verstellbewegung der Greiffinger (40) umsetzt.

12. Fertigungsanlage (1) nach Anspruch 11, **dadurch gekennzeichnet, dass** die Stellanordnung (41) eine Eingriffsvorrichtung (43) umfasst, welche an zumindest einer von den in Axialrichtung bezüglich der Y-Achse (26) voneinander abgewendeten Stellflächen des Übertragungselements (42) anliegt und die Eingriffsvorrichtung (43) mit einem Stellorgan der Stellanordnung (41) verbunden ist.

13. Fertigungsanlage (1) nach Anspruch 11 oder 12, **dadurch gekennzeichnet, dass** die Stellanordnung (41) weiters zumindest eine Führungsstange (45) umfasst, welche parallel bezüglich der Y-Achse (26) ausgerichtet ist und mit dem Übertragungselement (42) auf der den Greiffngern (40) zugewendeten Seite verbunden ist, wobei die Führungsstange (45) am weiteren Tragrahmenelement (38) geführt gelagert ist.

14. Fertigungsanlage (1) nach einem der Ansprüche 11 bis 13, **dadurch gekennzeichnet, dass** die Stellanordnung (41) mehrere Führungsstangen (45) umfasst und an zumindest einer derselben ein in radialer Richtung vorragendes Stellelement (46) angeordnet ist, welches in jeweils eine an einem Stellteil (52, 53) der Kulissenanordnung (47) ausgebildeten Kulissenbahn (50, 51) eingreift.

15. Fertigungsanlage (1) nach einem der vorhergehenden Ansprüche, **dadurch gekennzeichnet, dass** die Linearführungseinheit (20) in Vertikalrichtung oberhalb der Arbeitseinheit (19) angeordnet ist.

16. Fertigungsanlage (1) nach einem der vorhergehenden Ansprüche, **dadurch gekennzeichnet, dass** maximal vier Arbeitsstationen (6) in einem Lagerrahmenmodul (13) angeordnet sind.

17. Fertigungsanlage (1) nach Anspruch 16, **dadurch gekennzeichnet, dass** zumindest einer der Arbeitsstationen (6) im Lagerrahmenmodul (13) eine Teilebereitstellungsstation (7) zugeordnet ist.

18. Fertigungsanlage (1) nach einem der vorhergehenden Ansprüche, **dadurch gekennzeichnet, dass** das Lagerrahmenmodul (13) in Transportrichtung (5) des Transportabschnitts (17) voneinander distanziert angeordnete Seitenwände (33) sowie die Seitenwände (33) miteinander verbindende Verbindungsbauteile (34) umfasst.

19. Fertigungsanlage (1) nach einem der vorhergehenden Ansprüche, **dadurch gekennzeichnet, dass** sich die Lagerrahmenmodule (13) an den jeweils einander zugewendeten Seitenwänden (33) oder an Stirnflächen von die Seitenwände (33) überragenden Verbindungsbauteilen (34) aneinander abstützen.

20. Fertigungsanlage (1) nach einem der vorhergehenden Ansprüche, **dadurch gekennzeichnet, dass** an einem Lagerrahmenmodul (13) zusätzlich eine Teilebereitstellungsstation (7) zur Bereitstellung eines Teiles (3) gelagert ist.

## Claims

1. A manufacturing plant (1) for producing an assembly consisting of a plurality of parts (3), said manufacturing plant comprising a conveying facility (2) for conveying the parts (3) by means of parts carriers (4), a plurality of workstations (6), which are arranged one after the other at a grid spacing (18) in the direction of conveyance (5) along a conveying section (17) of the conveying facility (2), wherein at least individual bearing frame modules (13) are provided, which have at least one workstation (6) with a handling device (16) mounted at this workstation (6), wherein the bearing frame modules (13) have respectively a width (31) and the workstations (6) have respectively a width (31a) in the direction of conveyance (5) of the conveying section (17), and the handling device (16) has in addition a work unit (19), in particular a gripper unit (19a), which is adjustable relative to the workstation (6) via a linear guide unit (20) and a swivel axis unit (21), wherein the linear guide unit (20) comprises a plurality of distinct linear guides (22, 23, 24) with drives for the respective adjustment of the work unit (19) in one of the three different main axis directions (25, 26, 27), and the swivel axis unit (21) comprises a plurality of distinct swivel drives with swivel axes (28, 29, 30) for the respective adjustment of the work unit (19) about one of the three different main axis directions (25, 26, 27), and wherein the linear guides (22, 23, 24) of the linear guide unit (20) are arranged distant from the swivel axes (28, 29, 30) of the swivel axis unit (21), **characterized in that** at least two of the work stations (6) are optionally arranged immediately adjacent to one another or at a distance from one another, which distance corresponds to one or multiple times the width (31a) of a workstation (6), wherein the handling device (16) with the work unit (19) in direction of conveyance (5) of the conveying section (17) has a maximum working range (32), which corresponds to the width (31a) of the workstation (6).

2. The manufacturing plant (1) according to claim 1, **characterized in that** several bearing frame modules (13) are arranged along the conveying section (17), wherein in addition to two bearing frame modules (13) immediately adjacent to one another, at least one further bearing frame module (13) is arranged, which is arranged at a distance from one of the other bearing frame modules (13), which distance corresponds to one or multiple times the width (31) of the narrowest bearing frame module (13).

3. The manufacturing plant (1) according to claim 2, **characterized in that** the swivel axis unit (21) is arranged in the region of the work unit (19).

4. The manufacturing plant (1) according to one of the preceding claims, **characterized in that** the swivel axis unit (21) for each of the individual main axis directions (25, 26, 27) has a distinct swivel axis (28, 29, 30) with respectively a distinct swivel drive.

5. The manufacturing plant (1) according to one of the preceding claims, **characterized in that** the work unit (19) comprises a support frame (35), which is movably connected with the linear guide unit (20) via a support arrangement (36), and the swivel axes (28, 29, 30) of the swivel axis unit (21) are arranged on the support frame (35).

6. The manufacturing plant (1) according to claim 5, **characterized in that** the support frame (35) has a plurality of support frame elements (37, 38), a first support frame element (37) of which is swivellably mounted relative to the support arrangement (36) on the latter about the swivel axis (28) for swivelling about the X-axis (25).

7. The manufacturing plant (1) according to claim 5 or 6, **characterized in that** between the first and further support frame elements (37, 38) forming the support frame (35) a swivel arrangement (39) is arranged, by means of which the further support frame element (38) is swivellably mounted relative to the first support frame element (37) about the swivel axis (29) for swivelling about the Y-axis (26).

8. The manufacturing plant (1) according to one of claims 5 to 7, **characterized in that** the work unit (19) has a gripper unit (19a) with cooperating gripping fingers (40), and the gripping fingers (40) are mounted by means of the swivel axis (30) on the further support frame element (38) for swivelling about the Z-axis (27), wherein the swivel axis (30) for the gripping fingers (40) is arranged immediately adjacent to the gripping fingers (40).

9. The manufacturing plant (1) according to claim 8, **characterized in that** the gripping fingers (40) on the one hand are connected with the swivel axis (30) in a torque-proof manner, and on the other hand are mounted displaceably in axial direction on the swivel axis (30).

10. The manufacturing plant (1) according to one of claims 5 to 9, **characterized in that** the swivel arrangement (39) arranged between the two support frame elements (37, 38) is arranged, viewed in vertical direction, between the swivel axis (28) of the first support frame element (37) forming the X-axis (25) and the swivel axis (30) forming the Z-axis (27).

11. The manufacturing plant (1) according to one of claims 5 to 10, **characterized in that** in the region of the swivel arrangement (39) an adjusting arrangement (41) is provided, which is held on the first support frame element (37) and via a transmission element (42) adjustably mounted on the further support frame element (38) in parallel direction which respect to the Y-axis (26) transfers an adjustment stroke aligned parallel with respect to the Y-axis via a link arrangement (47) into an adjustment movement of the gripping fingers (40) in parallel direction with respect to the Z-axis (30) and aligned in opposite direction to one another.

12. The manufacturing plant (1) according to claim 11, **characterized in that** the adjusting arrangement (41) comprises an engagement device (43), which lies against at least one of the adjustment faces of the transmission element (42) facing away from one another in axial direction with respect to the Y-axis (26), and the engagement device (43) is connected with an adjusting member of the adjusting arrangement (41).

13. The manufacturing plant (1) according to claim 11 or 12, **characterized in that** the adjusting arrangement (41) additionally comprises at least one guide rod (45), which is aligned parallel with respect to the Y-axis (26) and is connected with the transmission element (42) on the side facing the gripping fingers (40), wherein the guide rod (45) is mounted in a guided manner on the further support frame element (38).

14. The manufacturing plant (1) according to one of claims 11 to 13, **characterized in that** the adjusting arrangement (41) comprises a plurality of guide rods (45) and on at least one thereof an adjustment element (46) is arranged, projecting in radial direction, which engages into respectively a slide track (50, 51) formed on an adjusting part (52, 53) of the link arrangement (47).

15. The manufacturing plant (1) according to one of the preceding claims, **characterized in that** the linear guide unit (20) is arranged in vertical direction above the work unit (19).

16. The manufacturing plant (1) according to one of the preceding claims, **characterized in that** a maximum of four work stations (6) are arranged in a bearing frame module (13).

17. The manufacturing plant (1) according to claim 16, **characterized in that** a parts provision station (7) is associated with at least one of the work stations (6) in the bearing frame module (13).

18. The manufacturing plant (1) according to one of the preceding claims, **characterized in that** the bearing frame module (13) comprises side walls (33) arranged at a distance from one another in direction of conveyance (5) of the conveying section (17) and connecting components (34) connecting the side walls (33) with one another.

19. The manufacturing plant (1) according to one of the preceding claims, **characterized in that** the bearing frame modules (13) are supported against one another on the side walls (33) respectively facing one another or on end faces of connecting components (34) projecting over the side walls (33).

20. The manufacturing plant (1) according to one of the preceding claims, **characterized in that** on a bearing frame module (13) in addition a parts provision station (7) for the provision of a part (3) is mounted.

## Revendications

1. Installation de fabrication (1) pour fabriquer un sous-groupe constitué de plusieurs pièces (3), comprenant une installation de transport (2) pour transporter les pièces (3) à l'aide de porte-pièces (4), plusieurs stations de travail (6), qui sont disposées les unes derrière les autres avec un pas (18) dans la direction de transport (5) le long d'un tronçon de transport (17) de l'installation de transport (2), dans laquelle au moins des modules individuels de cadres supports (13) sont prévus, qui comprennent au moins une station de travail (6) comportant un dispositif de manipulation (16) logé contre cette station de travail (6), les modules de cadre support (13) présentant chacun une largeur (31) et les stations de travail (6) présentant chacun une largeur (31a) dans la direction de transport (5) du tronçon de transport (17), et le dispositif de manipulation (16) comprenant en outre une unité de travail (19), en particulier une unité de saisie (19a), qui par l'intermédiaire d'une unité de guidage linéaire (20), ainsi que d'une unité d'axes de pivotement (21), peut être déplacée par rapport à la station de travail (6), l'unité de guidage linéaire (20) comprenant plusieurs guidages linéaires (22, 23, 24) qui lui sont propres, ayant des organes d'entraînement destinés au déplacement de chaque unité de travail (19) dans l'une des trois directions différentes des axes principaux (25, 26, 27), et l'unité d'axes de pivotement (21) comprenant plusieurs organes d'entraînement en pivotement qui lui sont propres, avec des axes de pivotement (28, 29, 30) pour le déplacement de chacune des unités de travail (19) autour de l'une des trois directions différentes d'axes principaux (25, 26, 27), et les guidages linéaires (22, 23, 24) de l'unité de guidage linéaire (20) étant disposés à une certaine distance des axes de pivotement (28, 29, 30) de l'unité d'axes de pivotement (21), **caractérisée en ce qu'**au moins deux des stations de travail (6) sont disposées au choix immédiatement voisines l'une de l'autre ou à une certaine distance l'une de l'autre, laquelle distance correspondant à une ou plusieurs fois la largeur (31a) d'une station de travail (6), le dispositif de manipulation (16), avec l'unité de travail (19), présentant dans la direction de transport (5) du tronçon de transport (17) une zone de travail maximale (32), qui correspond à la largeur (31a) de la station de travail (6).

2. Installation de fabrication (1) selon la revendication 1, **caractérisée en ce que** le long du tronçon de transport (17) sont disposés plusieurs modules de cadre support (13), au moins un module de cadre supplémentaire (13), qui est disposé à une certaine distance de l'un des autres modules de cadre support (13), distance correspondant à une ou plusieurs fois la largeur (31) du module de cadres supports (13) le plus étroit, étant disposé en plus de deux modules de cadre support (13) immédiatement voisins l'un de l'autre.

3. Installation de fabrication (1) selon la revendication 2, **caractérisée en ce que** l'unité d'axes de pivotement (21) est disposée dans la zone de l'unité de travail (19).

4. Installation de fabrication (1) selon l'une des revendications précédentes, **caractérisée en ce que** l'unité d'axes de pivotement (21) comprend, pour chacune des directions individuelles d'axes principaux (25, 26, 27), un axe de pivotement (28, 29, 30) qui lui est propre, chacun ayant son propre organe d'entraînement en pivotement.

5. Installation de fabrication (1) selon l'une des revendications précédentes, **caractérisée en ce que** l'unité de travail (19) comprend un cadre porteur (35), qui est relié avec déplacement possible à l'unité de guidage linéaire (20) par l'intermédiaire d'un arrangement porteur (36), et les axes de pivotement (28, 29, 30) de l'unité d'axes de pivotement (21) étant disposés contre le cadre porteur (35).

6. Installation de fabrication (1) selon la revendication 5, **caractérisée en ce que** le cadre porteur (35) comprend plusieurs éléments de cadres porteurs (37, 38), parmi lesquels le premier élément de cadre porteur (37) est logé, par rapport à l'arrangement porteur (36), contre ce dernier de façon à pouvoir pivoter autour de l'axe de pivotement (28), pour un pivotement autour de l'axe X (25).

7. Installation de fabrication (1) selon la revendication 5 ou 6, **caractérisée en ce qu'**entre les premiers éléments de cadres porteurs (37, 38) et les éléments de cadres supports supplémentaires, formant le cadre support (35), est disposé un arrangement de pivotement (39), à l'aide duquel l'élément de cadre porteur supplémentaire (38) est logé de façon à pouvoir pivoter par rapport au premier élément de cadre porteur (37) autour de l'axe de pivotement (29), pour pivotement autour de l'axe Y (26).

8. Installation de fabrication (1) selon l'une des revendications 5 à 7, **caractérisée en ce que** l'unité de travail (19) comprend une unité de saisie (19a), comprenant des doigts de saisie coopérants (40), et les doigts de saisie (40) sont, à l'aide de l'axe de pivotement (30), logés contre l'élément de cadre porteur supplémentaire (38) pour pivotement autour de l'axe Z (27), l'axe de pivotement (30) pour les doigts de saisie (40) étant disposé au voisinage immédiat des doigts de saisie (40).

9. Installation de fabrication (1) selon la revendication 8, **caractérisée en ce que** les doigts de saisie (40) sont d'une part reliés d'une manière résistante à la torsion à l'axe de pivotement (30), et d'autre part sont logés avec possibilité de déplacement dans la direction axiale sur l'axe de pivotement (30).

10. Installation de fabrication (1) selon l'une des revendications 5 à 9, **caractérisée en ce que** l'arrangement pivotant (39) disposé entre les deux éléments de cadres porteurs (37, 38) sont disposés, quand on regarde dans la direction verticale, entre l'axe de pivotement (28), formant l'axe X (25), du premier élément de cadre porteur (37), et l'axe de pivotement (30), formant l'axe Z (27).

11. Installation de fabrication (1) selon l'une des revendications 5 à 10, **caractérisée en ce qu'**il est prévu dans la zone du dispositif de pivotement (39) un arrangement de commande (41), qui est maintenu contre le premier élément de cadre porteur (37) et, par l'intermédiaire d'un élément de transmission (42), logé de façon à pouvoir se déplacer contre l'élément du cadre porteur supplémentaire (38) dans une direction parallèle à l'axe Y, convertit une course de déplacement orientée parallèlement par rapport à l'axe Y (26), par l'intermédiaire d'un arrangement de coulisse (47), en un mouvement de déplacement des doigts de saisie (40), orienté dans une direction parallèle à l'axe Z (30), et dans des directions opposées l'un à l'autre.

12. Installation de fabrication (1) selon la revendication 11, **caractérisée en ce que** l'arrangement de commande (41) comprend un dispositif d'engrènement (43), qui s'appuie contre au moins l'une des faces de réglage, opposées l'une à l'autre dans la direction axiale par rapport à l'axe Y (26), de l'élément de transmission (42), et le dispositif d'engrènement (43) est relié à un organe de commande de l'arrangement de commande (41).

13. Installation de fabrication (1) selon la revendication 11 ou 12, **caractérisée en ce que** le dispositif de commande (41) comprend en outre au moins une barre de guidage (45), qui est orientée parallèlement à l'axe Y (26), et est relié à l'élément de transmission (42) sur le côté dirigé vers les doigts de saisie (40), la barre de guidage (45) étant logée en étant guidée contre l'élément de cadre porteur supplémentaire (38).

14. Installation de fabrication (1) selon l'une des revendications 11 à 13, **caractérisée en ce que** l'arrangement de commande (41) comprend plusieurs barres de guidage (45), et, contre au moins l'une de ces dernières est disposé un élément de commande (46), dépassant dans la direction radiale, qui entre en prise avec chaque voie de coulisse (50, 51) réalisée contre une pièce de commande (52, 53) de l'arrangement de coulisse (47).

15. Installation de fabrication (1) selon l'une des revendications précédentes, **caractérisée en ce que** l'unité de guidage linéaire (20) est disposée dans la direction verticale au-dessus de l'unité de travail (19).

16. Installation de fabrication (1) selon l'une des revendications précédentes, **caractérisée en ce qu'**au maximum quatre stations de travail (6) sont disposées dans un module de cadre support (13).

17. Installation de fabrication (1) selon la revendication (16), **caractérisée en ce qu'**une station (7) de mise à disposition des pièces est affectée à au moins l'une des stations de travail (6) dans le module de cadre support (13).

18. Installation de fabrication (1) selon l'une des revendications précédentes, **caractérisée en ce que** le module de cadre support (13) comprend des parois latérales (33), disposées à une certaine distance l'une de l'autre dans la direction de transport (5) du tronçon de transport (17), ainsi que des composants de liaison (34) qui relient l'une à l'autre les parois latérales (33).

19. Installation de fabrication (1) selon l'une des revendications précédentes, **caractérisée en ce que** les modules de cadre support (13) s'appuient l'un contre l'autre, contre chacune des parois latérales (33) dirigées l'une vers l'autre, ou contre des surfaces frontales de composants de liaison (34) qui dépassent des parois latérales (33).

20. Installation de fabrication (1) selon l'une des revendications précédentes, **caractérisée en ce qu'**en outre une station (7) de mise à disposition des pièces, destinée à mettre à disposition une pièce (3), est logée contre un module de cadre support (13).
